# EUROPÄISCHE PATENTSCHRIFT

(11) **EP 0 308 800 B1**
(45) Veröffentlichungstag und Bekanntmachung des Hinweises auf die Patenterteilung: **03.03.1993**
(21) Anmeldenummer: 88115056.9
(22) Anmeldetag: 15.09.1988
(51) Int. Cl.: C09B 67/20

(54) **Pigmentzubereitungen, Verfahren zu ihrer Herstellung und ihre Verwendung**
Pigment preparations, their manufacturing process and their use
Préparations pigmentaires, leur procédé de fabrication et leur utilisation

(30) Priorität: 19.09.1987 DE 3731637; 30.10.1987 DE 3736864
(43) Veröffentlichungstag der Anmeldung: 29.03.1989
(73) Patentinhaber: HOECHST AKTIENGESELLSCHAFT, 65926 Frankfurt am Main (DE)
(72) Erfinder: Sommer, Andreas, Dr., D-6272 Niedernhausen (DE); Dietz, Erwin, Dr., D-6233 Kelkheim Taunus (DE); Urban, Manfred, D-6200 Wiesbaden (DE)

(56) Entgegenhaltungen:
- EP-A- 0 198 994
- EP-A- 0 199 605
- US-A- 4 347 352

## Beschreibung

Die Erfindung betrifft leicht dispergierbare, flockungsstabile Pigmentzubereitungen, die zum Pigmentieren von natürlichen und synthetischen Materialien verwendet werden können.

Beim Einarbeiten von Pigmenten bzw. Pigmentzubereitungen in Anstrichsysteme, Druckfarben und Kunststoffe treten häufig Schwierigkeiten auf, die mit der Feinteiligkeit der Pigmente zusammenhängen. So lassen sich zahlreiche Pigmente im jeweiligen Anwendungsmedium nur unter hohem mechanischem Aufwand in eine Dispersion mit befriedigenden anwendungstechnischen Eigenschaften bringen. Außerdem besteht eine Neigung der feinen Pigmentteilchen in den Dispersionen zu agglomerieren und auszuflocken, was in der Regel zu einer Erhöhung der Viskosität der Dispersion und insbesondere zu Verlusten an Farbstärke und Glanz bei den gefärbten Materialien führt. Wie aus der DE-A-35 14 077 (US-A-4,664,714), DE-A-31 06 906 (US-A-4,310,359), DE-A-25 00 509 (US-A-3,973,981) und JP-A-59 096 175 bekannt ist, kann die Dispergierbarkeit und Flockungsstabilität von Pigmenten verbessert werden, indem man die Pigmente mit Pigmentderivaten behandelt, deren chemische Struktur der jeweiligen Struktur des Pigments sehr ähnlich ist. Die Verwendung derartiger Pigmentderivate in Pigmentzubereitungen ist jedoch mit mehreren Nachteilen behaftet. So müssen die Pigmentderivate im Farbton dem jeweiligen Pigment in der Zubereitung angepaßt werden und können deshalb nicht ohne weiteres für Zubereitungen anderer Pigmente eingesetzt werden. Außerdem lassen sich die Pigmentderivate wegen der Schwerlöslichkeit der ihnen zugrundeliegenden Pigmente nur unter schwierigen Bedingungen und mit hohem Kostenaufwand herstellen. Darüberhinaus weisen die Pigmentderivate in der Regel nicht die gleichen Lösemittelechtheiten wie die Pigmente selbst auf. Werden somit die mit den Derivaten modifizierten Pigmente in einen Kunststoff oder in ein Bindemittelsystem eingearbeitet, so können die kräftig gefärbten, besser löslichen Pigmentderivate an die Grenzfläche des Systems wandern und benachbarte Stoffe anfärben.

Aus der JP-A-59 193 125 sind bereits Dispergiermittel für Pigmentzubereitungen bekannt, wobei die Dispergiermittel durch Reaktion von farblosen aromatischen Verbindungen mit hydroxymethyliertem oder alkoxymethyliertem Melamin, Benzoguanamin oder Harnstoff und anschließender Reaktion mit Phthalimid oder hydroxymethyliertem Phthalimid erhältlich sind. Die Herstellung dieser Dispergiermittel ist wegen der jeweils nur als Gemische einzusetzenden hydroxymethylierten oder alkoxymethylierten Ausgangsstoffe nachteilig und führt zu schlecht reproduzierbaren Resultaten.

Ferner sind in der EP-A2-0 199 605 Pigmentpasten beschrieben, die als Dispergiermittel ein Kondensationsprodukt aus einem Aminotriazin, Formaldehyd, einem Diol und einem einwertigen Alkohol enthalten.

Gegenstand der Erfindung sind Pigmentzubereitungen, gekennzeichnet durch einen Gehalt an a) einem oder mehreren Pigmenten und b) an einer oder mehreren farblosen oder wenig gefärbten Verbindungen der allgemeinen Formel (I), 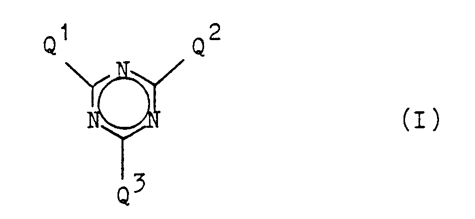
in der Q¹, Q² und Q³ unabhängig voneinander jeweils einen Rest -X-A, -OR¹, -SR¹, Halogen, -NR²R³ oder einen Rest Q aus einer, zwei oder bis zu fünfzehn, vorzugsweise bis zu 6 trivalenten Gruppen der Formel (Ia), 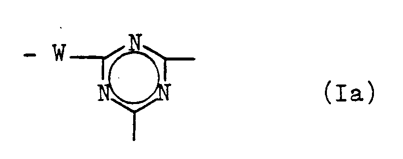
die jeweils über die divalente Gruppe W mit einer freien Valenz der nächsten Gruppe der Formel (Ia) oder mit dem Triazinring des Grundkörpers der Formel (I) sowie an den übrigen freien Valenzen jeweils mit einem Rest -X-A, -OR¹, -SR¹, Halogen oder -NR²R³ verbunden sind und die im Falle von mehr als zwei Gruppen der Formel (Ia) linear oder verzweigt miteinander verbunden sind, bedeuten,
wobei mindestens ein Rest der Formel -X-A in der Verbindung der Formel (I) vorhanden ist und
A für den Rest eines aromatischen Ringsystems mit 2 bis 6, vorzugsweise 2 oder 3, ankondensierten Ringen und mit insgesamt mindestens 9 und vorzugsweise bis 14 Ringatomen oder für den Rest einer Gruppe von 2 bis 3, vorzugsweise zwei verbundenen aromatischen Ringsystemen aus jeweils einem Ring oder 2 bis 4 ankondensierten Ringen, vorzugsweise 1 oder 2 Ringen, mit jeweils 5 bis 7 Ringatomen pro Ring, in der die verbundenen aromatischen Ringsysteme über eine direkte Bindung oder eine divalente Gruppe aus der Reihe -O-, -S-, -CO-, -SO-, -SO₂- und C₁-C₁₂-Alkylen, vorzugsweise aus der Reihe -O-, -CO-, -SO₂- und -CH₂-, verbunden sind, oder für einen der genannten Reste, die einen oder mehrere, vorzugsweise bis zu drei, Substituenten aus der Reihe C₁-C₂₄-Alkyl, -OR′, Halogen, wie -F, -Cl und -Br, -NR′R˝, -COOR′, -CONR′R˝, -NR′COR˝, -CN, -CF₃ und -NO₂, vorzugsweise aus der Reihe C₁-C₄-Alkyl, -OR′ und Halogen, aufweisen, worin R′ und R˝ unabhängig voneinander Wasserstoff oder ein geradkettiges oder verzweigtes C₁-C₁₂-Alkyl, vorzugsweise Wasserstoff oder C₁-C₄-Alkyl, oder zusammen mit dem N-Atom einen 5- oder 6-gliedrigen Heterocyclus bedeuten, steht,
X für eine divalente Gruppe -NR*-, -O- oder -S-, vorzugsweise -NR*-, worin R* einen Reste aus der Reihe Wasserstoff, C₁-C₆-Alkyl, C₁-C₆-Hydroxyalkyl, (C₁-C₄-Alkoxy)-C₁-C₆-alkyl und C₅-C₇-Cycloalkyl, vorzugsweise Wasserstoff oder C₁-C₄-Alkyl, bedeutet, steht,
R¹, R² und R³ unabhängig voneinander für den Rest Wasserstoff, geradkettiges oder verzweigtes C₁-C₂₄-Alkyl oder C₂-C₂₄-Alkenyl, vorzugsweise C₁-C₁₂-Alkyl oder C₃-C₁₂-Alk-(2-11)-enyl, C₅-C₁₂-Cycloalkyl mit ein oder zwei Ringen, C₇-C₁₈-Aralkyl, Heteroaryl mit 1 oder 2 Ringen und insgesamt 5 bis 8 Ringatomen, Phenyl,
einen Phenylrest, der durch mindestens einen Rest aus der Gruppe C₁-C₁₂-Alkyl, Halogen, wie F, Cl oder Br, -OR⁴, -NR⁴R⁵, -COOR⁴, -CONR⁴R⁵, -NR⁵COR⁴, -CN, -CF₃, -NO₂ und -T-(CH₂)ₚ-NR^{o}R^{t}, vorzugsweise aus der Gruppe C₁-C₆-Alkyl, Halogen, -NR⁴R⁵ und
-T-(CH₂)ₚ-NR^{o}R^{t}, substituiert ist, wobei R⁴ und R⁵ unabhängig voneinander Wasserstoff oder C₁-C₂₄-Alkyl, vorzugsweise R⁴ Wasserstoff oder C₁-C₁₂-Alkyl und R⁵ Wasserstoff, R^{o} und R^{t} unabhängig voneinander C₁-C₂₄-Alkyl, vorzugsweise C₁-C₁₂-Alkyl, p eine Zahl von 1 bis 6 und T eine direkte Bindung oder eine divalente Gruppe aus der Reihe -O-, -S-, -CO-, -SO-, -SO₂-, -NR^{a}-, -NR^{a}CO-, -NR^{a}SO₂-, -SO₂NR^{a}- und -CONR^{a}-, vorzugsweise aus der Reihe -SO₂-, -SO₂NR^{a}- und -CONR^{a}- und
R^{a} Wasserstoff oder eine C₁-C₁₂-Alkylgruppe, vorzugsweise Wasserstoff oder C₁-C₄-Alkyl bedeuten,
oder für C₁-C₁₂-Hydroxyalkyl oder -Polyhydroxyalkyl oder für einen C₁-C₃₀-Alkylrest, der in der Kette durch eine oder mehrere nicht nebeneinanderstehende divalente Gruppen der Formel -O- oder -NR^{v}-, worin R^{v} Wasserstoff oder C₁-C₂₄-Alkyl, vorzugsweise Wasserstoff oder C₁-C₁₈-Alkyl, bedeutet, oder eine Kombination von mindestens zwei der divalenten Gruppen unterbrochen ist und der durch einen 5- oder 6-gliedrigen heterocyclischen Ring substitutiert sein kann, insbesondere dabei für einen Rest (C₁-C₄-Alkoxy)-C₁-C₁₂-alkyl oder einen Rest der Formel -(CR⁶R⁷)_{q}-NR⁸R⁹, worin q eine Zahl von 1 bis 6, R⁶ und R⁷ unabhängig voneinander Wasserstoff oder C₁-C₆-Alkyl, vorzugsweise Wasserstoff, sowie R⁸ und R⁹ unabhängig voneinander C₁-C₂₄-Alkyl, vorzugsweise C₁-C₁₂-Alkyl, oder R⁸ Wasserstoff und R⁹ C₁-C₂₄-Alkyl, vorzugsweise C₁-C₁₈-Alkyl, oder R⁸ und R⁹ zusammen mit dem N-Atom eine 5- oder 6-gliedrigen Ring eines heterocyclischen Systems bedeuten, stehen oder
R¹ die obengenannte Bedeutung hat und R² und R³ zusammen mit dem N-Atom für einen 5- oder 6-gliedrigen Ring eines heterocyclischen Systems mit ein oder zwei Ringen stehen sowie
W eine divalente Gruppe der Formel -NR^{s}-Y-NR^{t}-, -O-Y-O-, -O-Y-NR^{s}-, -S-Y-S-, -O-Y-S- oder -NR^{s}-Y-S-, vorzugsweise -NR^{s}-Y-NR^{t}, darstellt, wobei in den vorstehenden Formeln Y für eine geradkettige oder verzweigte C₂-C₂₀-Alkylengruppe, vorzugsweise eine geradkettige C₂-C₈-Alkylengruppe, oder eine C₂-C₂₀-Alkylengruppe, die durch eine oder mehrere Gruppen -O-, -S-, -NR^{u}-, worin R^{u} Wasserstoff oder C₁-C₂₄-Alkyl, vorzugsweise C₁-C₁₈-Alkyl, insbesondere C₁-C₆-Alkyl, bedeutet, -CO-, -SO-, -SO₂-, C₅-C₇-Cycloalkylen, C₅-C₁₀-Arylen, einen divalenten heterocyclischen Ring mit 5 bis 7 Ringatomen, vorzugsweise Piperazin-1,4-diyl, oder eine Kombination der vorstehenden Gruppen unterbrochen ist und die weiter nicht substituiert oder weiter substituiert ist, oder für ein divalentes 1-, 2- oder 3-kerniges gesättigtes, ungesättigtes oder aromatisches carbocyclisches oder heterocyclisches Ringsystem mit 5 bis 14 Ringatomen, vorzugsweise 1,4-Phenylen, oder zwei der Ringsysteme, die über eine direkte Bindung oder eine Gruppe C₁-C₆-Alkylen, -O-, -S-, -CO-, -SO- oder -SO₂- verknüpft sind, wobei die Ringsysteme nicht weiter substituiert oder weiter substituiert sind, steht und
R^{s} und R^{t} unabhängig voneinander einen Rest Wasserstoff, C₁-C₂₄-Alkyl, vorzugsweise C₁-C₁₈-Alkyl, insbesondere C₁-C₆-Alkyl, C₁-C₆-Hydroxyalkyl, (C₁-C₄-Alkoxy)-C₁-C₆-alkyl oder Cycloalkyl bedeuten oder zusammen mit N-Y-N einen heterocyclischen Ring bedeuten.

Von besonderem Interesse sind erfindungsgemäße Pigmentzubereitungen, gekennzeichnet durch einen Gehalt an Verbindungen der Formel (I), in der Q¹, Q² und Q³ unabhängig voneinander jeweils einen Rest -X-A, -NR²R³ oder einen Rest Q aus 1 bis 15 trivalenten Gruppen der Formel (Ia), die jeweils über die divalente Gruppe W mit einer freien Valenz der nächsten Gruppe der Formel (Ia) oder mit dem Triazinrest des Grundkörpers der Formel (I) sowie an den übrigen freien Valenzen jeweils mit einem Rest -X-A oder -NR²R³ verbunden sind und die im Falle von mehr als zwei Gruppen der Formel (Ia) linear oder verzweigt miteinander verbunden sind, bedeuten, wobei mindestens ein Rest der Formel -X-A in der Verbindung der Formel (I) vorhanden ist und X, A, R², R³ und W die genannten Bedeutungen haben.

Von besonderem Interessse sind auch erfindungsgemäße Pigmentzubereitungen mit Verbindungen der Formel (I), in der ein oder zwei der Reste Q¹, Q² und Q³ jeweils einen Rest der Formel -X-A bedeuten und die übrigen Reste Q¹, Q², Q³, beziehungsweise die Reste an den übrigen freien Valenzen in dem Rest Q, der aus den trivalenten Gruppen der Formel (Ia) besteht, gleiche oder verschiedene Gruppen der Formeln -OR¹, -SR¹ und -NR²R³ sind, worin R¹, R² und R³ die genannten Bedeutungen haben.

Von besonderem Interesse sind erfindungsgemäße Zubereitungen aus organischen Pigmenten und Verbindungen der Formel (I), in der A den Rest eines kondensierten heteroaromatischen Ringsystems, vorzugsweise ein Rest eines heteroaromatischen Ringsystems mit 2 oder 3 ankondensierten Ringen mit insgesamt 9 bis 14 Ringatomen und mit Stickstoff- oder Schwefelatomen oder einem Gemisch davon als Heteroatome darstellt, wobei das Ringsystem die genannten Substituenten aufweisen kann.

Bevorzugt sind dabei erfindungsgemäße Zubereitungen mit Verbindungen der Formel (I) in der A ein Rest von Carbazol, N-Alkylcarbazol mit 1 bis 12 C-Atomen im Alkylrest, Benzthiazol, Chinolin, Chinaldin, Benzimidazol oder Benztriazol, und X eine divalente Gruppe der Formel -NR*-, in der R* Wasserstoff oder C₁-C₆-Alkyl ist, darstellt.

Von besonderem Interesse sind auch erfindungsgemäße Zubereitungen, gekennzeichnet durch einen Gehalt an einer Verbindung der Formel (I), in der R¹, R² und R³ unabhängig voneinander für den Rest Wasserstoff, geradkettiges oder verzweigtes C₁-C₁₂-Alkyl oder C₃-C₁₂-Alk-(2-11)-enyl, C₅-C₇-Cycloalkyl, C₇-C₁₂-Phenylalkyl, Heteroaryl mit 5 oder 6 Ringatomen, Phenyl, einen Phenylrest, der durch 1 bis 3 Reste aus der Gruppe C₁-C₁₂-Alkyl, Cl, -OR⁴, -NR⁴R⁵ und -T-(CH₂)ₚ-NR^{o}R^{t} substituiert ist, wobei R⁴ und R⁵ unabhängig voneinander Wasserstoff oder C₁-C₄-Alkyl, vorzugsweise R⁴ Wasserstoff oder C₁-C₄-Alkyl und R⁵ Wasserstoff, R^{o} und R^{t} unabhängig voneinander C₁-C₁₂-Alkyl, p eine Zahl von 1 bis 6 und T eine direkte Bindung oder eine divalente Gruppe aus der Reihe -SO₂-, -SO₂NR^{a}- und -CONR^{a}- bedeuten, oder C₁-C₆-Hydroxyalkyl, (C₁-C₄-Alkoxy)-C-₁-C₆-Alkyl, einen Rest der Formel -(CH₂)_{q}-NR⁸R⁹, worin q eine Zahl von 1 bis 3 und R⁸ und R⁹ unabhängig voneinander C₁-C₆-Alkyl oder R⁸ Wasserstoff und R⁹ C₁-C₁₈-Alkyl oder R⁸ und R⁹ mit dem N-Atom einen 5- oder 6-gliedrigen Ring eines heterocyclischen Systems bedeuten, stehen oder R¹ die obengenannte Bedeutung hat und R² und R³ zusammen mit dem N-Atom für einen gesättigten, ungesättigten oder aromatischen heterocyclischen Ring mit 5 oder 6 Ringatomen, der weiter nicht substituiert oder weiter substituiert ist, stehen.

Weiterhin von besonderem Interesse sind erfindungsgemäße Zubereitungen mit Verbindungen der Formel (I), in der Y eine substituierte oder unsubstituierte C₂-C₂₀-Alkylengruppe oder eine C₂-C₂₀-Alkylengruppe, die durch einen oder mehrere divalente Gruppen -O-, -S-, -NR^{u}-, worin R^{u} Wasserstoff oder C₁-C₁₈-Alkyl bedeutet, -CO-, -SO-, -SO₂- oder Piperazin-1,4-diyl unterbrochen ist, darstellt.

Ebenfalls von besonderem Interesse sind Pigmentzubereitungen, gekennzeichnet durch einen Gehalt an einer Verbindung der Formel (I), in der
W eine Gruppe der Formel -NR^{s}-Y-NR^{t}- darstellt, wobei Y für eine geradkettige C₂-C₈-Alkylengruppe oder +eine C₂-C₁₂-Alkylengruppe, die durch eine oder mehrere divalente Gruppen -O-, -S-, -NR 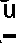 , worin R^{u} Wasserstoff oder C₁-C₁₈-Alkyl, insbesondere C₁-C₆-Alkyl bedeutet, -CO-, -SO-, -SO₂- oder einen divalenten heterocyclischen Rest mit 5 bis 7 Ringatomen oder eine Kombination der vorstehenden Gruppen unterbrochen ist, oder für ein divalentes ein- oder zweikerniges carbocyclisches oder heterocyclisches Ringsystem mit 5 bis 8 Ringatomen steht oder für zwei der Ringsysteme, die über eine dirkete Bindung oder eine Gruppe -CH₂-, -CH(CH₃)-, -C(CH₃)₂-, -O-, -S-, -CO-, -SO- oder -SO₂- verknüpft sind, wobei die Ringsysteme nicht weiter substituiert oder weiter substituiert sind, steht und R^{s} und R^{t} Wasserstoff oder C₁-C₁₈-Alkyl, insbesondere Wasserstoff oder C₁-C₆-Alkyl, bedeuten.

Bevorzugt sind erfindungsgemäße Zubereitungen, die Merkmale zweier oder mehrerer Zubereitungen enthalten, die von besonderem Interessse sind.

Die in den erfindungsgemäßen Pigmentzubereitungen enthaltenen Verbindungen der Formel (I) lassen sich durch Umsetzung von Cyanurhalogeniden, insbesondere Cyanursäurechlorid, mit Verbindungen mit acidem Wasserstoff der Formel H-X-A, H-O-R¹, H-S-R¹, H-NR²R³, H-W-H oder Gemischen davon herstellen, wobei in den vorstehenden Formeln X, A, R¹, R², R³ und W die obengenannten Bedeutungen haben und mindestens eine Verbindung der Formel H-X-A verwendet wird.

Verbindungen der Formel H-X-A sind aromatische Amino-, Alkylamino-, Hydroxy- oder Mercaptoverbindungen mit mehr als einem aromatischen Ring, wobei die aromatischen Ringe ankondensiert oder über divalente Reste miteinander verbunden sind, beispielsweise Verbindungen auf Basis von Naphthalin, Anthracen, Phenanthren, Pyren, Chrysen, Fluoren, Diphenyl, Diphenyläther, Diphenylsulfon, Indol, Chinolin, Acridin, Carbazol, Dibenzofuran, Dibenzothiophen, Purin, Benzimidazol, Benzimidazolon, Benztriazol, Benzthiazol und 2-Phenylbenzthiazol, die an einem aromatischen Kern eine oder mehrere, vorzugsweise eine Gruppe Hydroxy, Mercapto, Amino, oder Alkylamino tragen und die zusätzlich die weiter oben aufgeführten Substituenten tragen können. Für die Herstellung der erfindungsgemäßen Verbindungen der Formel (I) sind beispielsweise folgende Verbindungen der Formel H-X-A geeignet:
Aminocarbazole, Amino-N-9-alkyl-carbazole, Hydroxycarbazole, Aminobenzthiazole, Aminophenylbenzthiazole, Mercaptobenzthiazole, Naphthylamine, Aminobenztriazole, Aminofluorene, Aminopyrene, 4-Aminophenyl-benzophenone, Hydroxybenzophenone, Aminochinoline, Aminochinaldine, Aminobenzimidazole, Aminobenzimidazolone, Mercaptobenzimidazole, Aminopurine, Aminodiphenylether, Aminodiphenylsulfone, Naphthole, Aminonaphthole, Mercaptobenzoxazole, Mercaptopurine, Hydroxydiphenyle, Hydroxychinoline, Hydroxydiphenylmethane, Hydroxydiphenylether, Hydroxychinaldine, 5-Mercapto-1-phenyl-1,2,3,4-tetrazol und Aminophenyl-benzthiazole, vorzugsweise Aminocarbazole, 2-Hydroxycarbazol, Amino-N-9-alkyl-carbazole, 2-Aminobenzthiazole, 2-Mercaptobenzthiazol, Aminobenztriazole, 2-Aminofluoren, 3-Aminopyren, 4-(4-Aminophenyl)-benzophenon, Aminochinoline, Aminochinaldine, Aminobenzimidazole, 5-Aminobenzimidazolon, 2-Mercaptobenzimidazol, 6-Aminopurin, 4-Aminodiphenylsulfon, 2-Mercaptobenzoxazol, 6-Mercaptopurin, 4-Hydroxydiphenylmethan und 2-(Aminophenyl)-benzthiazole.
Besonders geeignet sind als Verbindungen H-X-A:
3-Aminocarbazol, 2-Aminocarbazol, 3-Amino-N-9-ethyl-carbazol, 2-Aminobenzthiazol, 2-Amino-6-methoxybenzthiazol, 2-Amino-6-ethoxybenzthiazol, 2-Amino-5,6-dimethylbenzthiazol, 2-Amino-4-methylbenzthiazol, 2-Amino-6-chlor-benzthiazol, 2-Amino-4-methoxybenzthiazol, 2-Amino-6-nitrobenzthiazol, 2-Amino-5-methoxybenzthiazol, 2-Amino-6-methylbenzthiazol, 2-(4-Aminophenyl)-6-methylbenzthiazol, 2-Aminobenzimidazol, 4-Aminochinaldin und 8-Aminochinaldin.

Das aromatische Ringsystem A ist in der Regel strukturell verschieden von dem Ringsystem des Pigmentmoleküls. Häufig werden besonders gute Flockungsstabilitäten erreicht, wenn das aromatische Ringsystem A gleich oder ähnlich aufgebaut ist wie ein Teilbereich des Ringsytems des organischen Pigmentmoleküls.

Beispiele für Verbindungen der Formel H-O-R¹ sind Alkanole wie Methanol, Ethanol, Propanol, Isopropanol, n-Butanol, 2-Butanol, Isobutanol, 2-Methyl-propan-2-ol, Pentanol, Hexanol, Heptanol, Octanol, Nonanol, Decanol, Undecanol, Dodecanol, Tetradecanol, Hexadecanol und Octadecanol, Alkenole wie Hexenol und Oleylalkohol, Cycloalkanole wie Cyclohexanol, Cyclopentanol und Cycloheptanol, Arylalkanole wie Benzylalkohol, Phenylethanol und Phenylpropanol, Glykole und Glykolmonoalkylether, wie Ethandiol, Propandiol, Hexandiol, Methoxyethanol, Ethoxyethanol, Methoxypropanol, Ethoxypropanol, Butoxyethanol, Butoxypropanol und Methoxybutanol, Dialkylaminoalkanole wie Dimethylaminoethanol, Diethylaminoethanol, Dimethylaminopropanol und Diethylaminopropanol, Phenol und substituierte Phenole, beispielsweise Alkylphenole, wie o-, m- und p-Kresol, Ethylphenole, Nonylphenol und Dodecylphenol, Resorcin, Brenzkatechin, Chlorphenol, Dichlorphenol, Methoxyphenol, Ethoxyphenol, Dimethylaminophenol, Salicylsäure, Salicylsäuremethylester, Hydroxybenzoesäureamid, Halogenphenole, wie Chorphenol, Dichlorphenol und Bromphenol, Nitrophenole wie o-, m- und p-Nitrophenol und 2,4-Dinitrophenol, 3-Hydroxybenzoesäure, 4-Hydroxybenzoesäure und 2-Hydroxybenzotrifluorid.

Besonders geeignet sind die genannten Alkanole mit 1 bis 6 C-Atomen, Cyclohexanol, Benzylalkohol, Phenylethanol, Di-(C₁-C₄-alkyl)-amino-C₁-C₄-alkanole, Phenol und substituierte Phenole. Besonders bevorzugt sind Methanol, Ethanol, Propanol, Isopropanol, Butanol, Isobutanol, Dimethylaminoethanol, Diethylaminoethanol, Dimethylaminopropanol und Diethylaminopropanol.

Beispiele für Verbindungen der Formel HSR¹ sind Thiole analog zu den obengenannten Alkoholen, insbesondere Ethylmercaptan, Hexylmercaptan, Mercaptoethanol, Cyclohexylmercaptan, Benzylmercaptan, Phenylethylmercaptan, Mercaptoethyl-methylether, Mercaptoethyl-ethyläther, Dimethylaminoethylmercaptan, Diethylaminoethylmercaptan, Dimethylaminopropylmercaptan, Diethylaminopropylmercaptan, Thiophenol und substituierte Thiophenole.

Beispiele für Verbindungen der Formel H-NR²R³ sind Alkylamine wie Ethylamin, Diethylamin, Propylamin, Butylamin, Hexylamin, Cyclohexylamin, Octylamin, Decylamin, Dodecylamin, Hexadecylamin, Octadecylamin, Octadecenylamin, Cocosfettamin, Oleylamin, Stearylamin und Talgfettamin, Alkoxyalkylamine wie 3-Methoxypropylamin und 3-Ethoxypropylamin, Arylalkylamine wie Benzylamin und Phenylethylamin, Alkanolamine wie Ethanolamin und Diethanolamin, Polyamine, wie Fettalkylalkylendiamine, beispielsweise Laurylpropylendiamin und Talgfettpropylendiamin, oder Fettalkylentriamine oder -tetramine, beispielsweise N-(3-Talgfettaminopropyl)-1,3-diaminopropan, N-[N-(3-Talgfettaminopropyl)-3-aminopropyl]-1,3-diaminopropan sowie entsprechende Verbindungen mit einem Lauryl-, Myristyl-, Cetyl-, Stearyl- oder Oleyl-Rest anstelle des Talgfett-Restes, Dialkylaminoalkylamine, wie N,N-Dimethylaminoethylamin, N,N-Diethylaminoethylamin, N,N-Dibutylaminopropylamin, N,N-Dimethylaminopropylamin, N,N-Diethylaminopropylamin, N,N-Dimethylaminobutylamin, N,N-Dipropylaminobutylamin, N,N-Dibutylaminobutylamin, N,N-Diisobutylaminopentylamin, N-N-Diethylaminopentylamin, N,N-Diethylaminohexylamin, N,N-Methyllaurylaminopropylamin, N,N-Dioleylaminoethylamin und N,N-Distearylaminobutylamin, heterocyclische Verbindungen mit Aminoalkylgruppen, wie N-Aminomethylpiperidin, N-Aminoethylpiperidin, N-Aminopropylpiperidin, N-Aminoethylpyrrolidin, N-Aminopropylpyrrolidin, N-Aminoethylpicolin, N-Aminopropyl-picolin, N-Aminoethylmorpholin, N-Aminopropylmorpholin, 1-(3-Aminopropyl)-imidazol und 1-(2-Aminoethyl)-piperazin, aromatische Amine wie Anilin, N-Alkylaniline, C-Alkylaniline, Alkylaminobenzole, Halogenaniline, Aminophenol, Aminobenzoesäureester, Nitraniline, p-(Dimethylamino)-anilin, p-Dimethylaminomethylanilin und vorzugsweise 1-(4-Aminophenyl)-3-diethylamino-1-propanon, 4-(2-Diethylamino-ethylsulfonyl)-anilin, N-(4-Aminophenyl)-N-methyl-3-diethylamino-propionamid, N-(4-Aminophenyl)-N-methyl-3-diethylamino-ethansulfonamid, 4-Amino-N-(3-diethylaminopropyl)-benzolsulfonamid und 4-Amino-N-(3-diethyl-aminopropyl)-benzamid, heterocyclische Amine, wie Aminotriazole, Aminothiazole, Aminopyridine, Aminopiperidine und Aminopiperazine, sowie heterocyclische Verbindungen mit reaktiven Stickstoffatom, wie substituierte und unsubstituierte Imidazole, Benzimidazole, Triazole, Morpholine, Pyrrolidine, Piperidine, Imidazoline, Imidazolidine und Piperazine.

Besonders geeignete Amine H-NR²R³ sind die genannten Alkylamine, Alkoxyalkylamine, Alkanolamine, Dialkylaminoalkylamine, heterocyclischen Verbindungen mit Aminoalkylgruppen, die bevorzugt genannten aromatischen Amine, Morpholine, Pyrrolidine, Piperidine, Imidazoline, Imidazolidine und Piperazine, vorzugsweise die genannten Dialkylaminoalkylamine, die heterocyclischen Verbindungen mit Aminoalkylgruppen, die oben bevorzugt genannten aromatischen Amine sowie Imidazoline, Imidazolidine und Piperazine.

Ein Teil der obengenannten Alkohole, Thiole und Amine sind difunktionell und können je nach Einsatzmenge und Reaktionsbedingungen als Verbindungen der Formel H-W-H eingesetzt werden, die zum Aufbau der divalenten Gruppen W nach Formel (Ia) bestimmt sind. Bevorzugte Verbindungen der Formel H-W-H sind beispielsweise Alkylendiamine, wie Ethylendiamin, Propylendiamin, 1,4-Butandiamin oder Hexamethylendiamin, N,N-Bis-(aminoalkyl)-alkylamine, wie N,N-Bis-(aminopropyl)-talgfettamin, -laurylamin, -myristylamin, -cetylamin oder -stearylamin, N-Methyl-diethylentriamin, 4,4′-Diaminodicyclohexyl-methan, 1,4-Bis-(3-aminopropyl)-piperazin, 4,4′-Diaminodiphenylmethan, 4,4′-Diaminodiphenylether, 4,4′-Diaminodiphenylsulfon, Phenylendiamine sowie substituierte Benzidine. Weiterhin kommen als Verbindungen der Formel H-W-H entsprechende Hydroxy- und Thiolverbindungen in Frage, beispielsweise Bisphenol A, 4,4′-Dihydroxydiphenylether, 4,4′-Dihydroxydiphenylsulfon, Mercaptoethanol, Mercaptobutanol, Aminoethanol, Aminopropanol, Aminothiophenole, Glykol, Diethylenglykol, Triethylenglykol und 1,4-Dihydroxycyclohexan.

Zur Herstellung der Verbindungen der Formel (I) können sämtliche Reaktionspartner gleichzeitig umgesetzt werden. Vorzugsweise läßt man jedoch die weniger reaktiven H-aciden Verbindungen zuerst mit dem Cyanurhalogenid reagieren und setzt die reaktiveren Komponenten in einem oder mehreren weiteren Reaktionsschritten um. In einigen Fällen kann es notwendig oder von Vorteil sein, zusätzlich säurebindende Mittel, beispielswiese tertiäre Amine, insbesondere Pyridin oder Triethylamin, Alkalihydroxide oder Alkalicarbonate, zu verwenden.

Die Herstellung der Verbindungen der Formel (I) kann nach üblichen Methoden erfolgen. In der Regel werden die Reaktionspartner in protischen oder aprotischen Lösungsmitteln, vorzugsweise in einem weitgehend inerten organischen Lösungsmittel, umgesetzt. Geeignet sind beispielsweise aromatische Kohlenwasserstoffe wie Toluol, Xylol, Trimethylbenzol, Chlorbenzol und Dichlorbenzol, Ether wie beispielsweise Ethylenglykoldimethylether, Ethylenglykoldiethylether, Propylenglykoldimethylether, Propylenglykoldiethylether, Diethylenglykoldimethylether und Dioxan, Ester die beispielsweise N-Butylacetat, Methylglykolacetat und Ethylglykolacetat, Ketone wie beispielsweise Methylethylketon, Methylisobutylketon und Cyclohexanon, Amide wie beispielsweise Dimethylformamid, Dimethylacetamid und N-Methylpyrrolidon (2), sowie Dimethylsulfoxid und Sulfolan.

Die Reaktion zur Herstellung der Verbindungen der Formel (I) wird bei einer Temperatur von 0 bis 180°, vorzugsweise 20 bis 140°C, in Abhängigkeit von der Reaktivität der verwendeten Reaktionspartner und der Art des Lösungsmittels durchgeführt. Bei Abwesenheit von säurebindenden Mitteln können die Verbindungen der Formel (I), die basischen Stickstoff enthalten, zunächst in Form ihrer Salze anfallen, die sich in vielen Fällen aufgrund ihrer Schwerlöslichkeit leicht, beispielsweise durch Filtration, aus der Reaktionslösung isolieren lassen. Diese Salze werden bevorzugt anschließend in Gegenwart basischer Verbindungen, beispielsweise Pyridin, Triethylamin, Alkalihydroxiden oder Alkalicarbonaten, in die freien Basen überführt. Die Verbindungen der Formel (I) können in vielen Fällen aber auch in Form ihrer Salze mit anorganischen oder organischen Säuren im Sinne der Erfindung eingesetzt werden.

Für die erfindungsgemäßen Pigmentzubereitungen eignen sich anorganische und organische Pigmente, insbesondere organische Pigmente wie beispielsweise Azopigmente, Azaporphine, Chinacridone, Diketopyrrolopyrrole, Flavanthron-, Anthanthron- und Pyranthronkörper, Derivate der Naphthalintetracarbonsäure, der Perylentetracarbonsäure, des Thioindigos, des Dioxazins, des Tetrachlorisoindolinons, verlackte Pigmente wie die Magnesium-, Calcium, Barium-, Aluminum-, Mangan- und Nickellacke von säuregruppenhaltigen Farbstoffen, sowie entsprechende Pigmentmischungen. Vorzugsweise enthalten die erfindungsgemäßen Pigmentzubereitungen 99,8 bis 50 Gew.-%, insbesondere 97 bis 70 Gew.-% Pigment.

Bevorzugte erfindungsgemäße Pigmentzubereitungen enthalten, bezogen auf das Pigment, 0,2 bis 30 Gew.-%, vorzugsweise 1 bis 20 Gew.-% an Verbindungen der Formel (I).

Zur Erzielung optimaler rheologischer und coloristischer Eigenschaften werden die Pigemente bevorzugt mit 0,3 bis 10 mg der Verbindungen der Formel (I) pro Quadratmeter Pigmentoberfläche, insbesondere 0,6 bis 5 mg Verbindung der Formel (I) pro Quadratmeter Pigmentoberfläche, beschichtet oder gemischt.

Gegenstand der Erfindung ist auch das Verfahren zur Herstellung der beanspruchten Pigmentzubereitungen, dadurch gekennzeichnet, daß die Oberfläche der Pigmente mit einer oder mehreren Verbindungen der Formel (I) beschichtet wird.

Es gibt eine Reihe von Möglichkeiten, die Verbindungen der Formel (I) auf die Pigmentoberfläche aufzubringen. So kann dieser Vorgang während oder nach der Pigmentsynthese, bei einem Finish-Prozeß oder bei der Weiterverarbeitung des Pigmentes im Anwendungsmedium erfolgen. Besonders bevorzugt ist das Aufbringen der Verbindungen der Formel (I) während der Pigmentsynthese oder in Verbindung mit einem Finish-Prozeß. Bei Pigmenten, die nach der Synthese feinteilig vorliegen, können die Verbindungen der Formel (I) oder ihre Salze zur Verbesserung der Pigmenteigenschaften vor der Pigmentsynthese, beispielsweise den Komponenten der Pigmentsynthese, oder während der Pigmentsynthese oder nach der Pigmentsynthese zugesetzt werden. Bei grobkristallinen Rohpigmenten, die nach der Synthese feinverteilt werden müssen, werden die Verbindungen zweckmäßig erst nach der Synthese und vor der Feinverteilung oder nach der Feinverteilung des grobkristallinen Rohpigments zugesetzt.

Je nach Ausführung kann das Aufbringen der Verbindungen der Formel (I) auf die Pigmentteilchen beispielsweise in wäßriger Suspension, in Wasser-Lösungsmittelgemischen oder in organischen Lösungsmitteln erfolgen. Unter Verwendung von trockenen Pigmentpulvern können die erfindungsgemäßen Pigmentzubereitungen außerdem durch einfaches Vermischen mit einer pulverförmigen Verbindung der Formel (I) hergestellt werden. Bessere Ergebnisse werden in der Regel erzielt, wenn man die Verbindung der Formel (I) zum trockenen Pigment oder bevorzugt zum feuchten Pigment zugibt und das Gemisch einem Mahlprozeß in den üblicherweise verwendeten Mahlaggregaten, beispielsweise in Knetern, Perlmühlen oder Walzenstühlen, unterwirft. Die Zugabe von Verbindungen der Formel (I) kann auch bei der Einarbeitung ins Anwendungsmedium zusammen mit dem Pigment erfolgen.

Beim Aufbringen der Verbindungen der Formel (I) auf die Pigmente in wäßriger Suspension oder in Wasser-Lösungsmittelgemischen wird das Pigment anschließend normalerweise durch Filtration isoliert. In der Regel hat der pH-Wert bei der Isolierung des Pigments einen Einfluß auf die Pigmenteigenschaften. Der optimale pH-Wert kann von Fall zu Fall variieren und wird zweckmäßig in wenigen orientierenden Versuchen ermittelt.

Die erfindungsgemäßen Pigmentzubereitungen können in fester Form oder in flüssiger Form in beliebiger Verdünnung mit wäßrigen und nicht-wäßrigen Medien, beispielsweise in Suspension in organischen Lösungsmitteln oder Wasser, vorliegen.

Es kann von Vorteil sein, die erfindungsgemäßen Pigmentzubereitungen in Kombination mit Tensiden einzusetzen. Die Pigmentzubereitungen können die Tenside auch direkt enthalten. Als Tenside eignen sich anionaktive, kationaktive und nichtionogene Verbindungen, beispielsweise Alkylsulfate, Alkylsulfonate, Alkylphosphate, Alkylbenzolsulfonate, insbesondere Laurylsulfat, Stearylsulfat, Dodecylsulfat, Dodecylsulfonate, Octadecylphosphate und Dodecylbenzolsulfonate, Sulfobernsteinsäureester, Kondensationsprodukte aus Fettsäure und Taurin oder Hydroxyethansulfonsäure, Harzseifen, Alkoxylierungsprodukte von Alkylphenolen, Fettalkoholen, Fettaminen, Fettsäuren und Fettsäureamiden, insbesondere Umsetzungsprodukte aus Nonylphenol, Dodecylphenol, Laurylalkohol, Cocosfettalkohol, Stearylalkohol, Oleylalkohol, Cocosfettamin, Talgfettamin, Stearylamin, Oleylamin, Cocosfettsäure, Stearinsäure oder Ölsäure mit 2 bis 100 Mol, vorzugsweise 5 bis 30 Mol Ethylenoxid, Umsetzungsprodukte aus oxethylierten Alkylphenolen und Fettalkoholen mit Chlorsulfonsäure und Phosphoroxychloriden. Als kationaktive Tenside kommen quarternäre Ammoniumsalze, beispielsweise Hexadecyltrimethylammoniumchlorid in Betracht. Die genannten Tenside können allein oder als Mischungen eingesetzt werden. Der Zusatz der Tenside kann jeweils vor, während oder nach dem Pigment-Finish erfolgen und es ist nicht erforderlich, das Tensid und die Verbindung der Formel (I) in der gleichen Stufe der Pigmentformierung zuzusetzen.

Besonders bevorzugte Pigmentzubereitungen bestehen im wesentlichen aus
a) mindestens einem organischen Pigment
b) 0,2 bis 30 Gew.-%, insbesondere 3 bis 15 Gew.-% Verbindung der Formel (I),
c) 0 bis 20 Gew.-%, insbesondere 0 bis 10 Gew.-% eines anionaktiven, kationaktiven oder nichtionogenen Tensids und
d) 0 bis 20 Gew.-% insbesondere 0 bis 10 Gew.-% üblicher Zusatzstoffe,
wobei die Anteile der Bestandteile b), c) und d) auf das Gewicht des Pigments oder der Pigmente bezogen sind.

Die üblichen Zusatzstoffe sind beispielsweise Restsalze von der Pigmentsynthese, anorganische Füllstoffe wie feinteiliges Bariumsulfat, Kreide, Kieselsäuren verschiedener Art, Aluminiumoxide oder Ruß, Wasser und Konservierungsstoffe. Vorzugsweise ist der Wassergehalt der Pigmentzubereitungen unter 1 Gew.-%, insbesondere unter 0,2 Gew.-%.

Gegenstand der Erfindung ist auch die Verwendung der erfindungsgemäßen Pigmentzubereitungen zum Pigmentieren und Färben natürlicher und synthetischer Materialien. Bevorzugt ist die Verwendung bei der Herstellung von Anstrich- und Druckfarben sowie zum Einfärben von Kunststoffen und hochmolekularen Materialien. Besonders bevorzugt ist die Verwendung zum Pigmentieren von Lacksystemen, insbesondere von Einbrennlacksystemen.

Die erfindungsgemäßen Pigmentzubereitungen zeigen in den meisten Lacksystemen, vor allen aber in den üblicherweise schwerpigmentierbaren Systemen wie TSA-NAD (Thermosetting Acrylic Non Aqueous Dispersion) und "High Solids" einwandfreie rheologische Eigenschaften, beispielsweise hervorragenden Glanz, gute Fließfähigkeit und gute Flockungsstabilität bei gleichzeitiger positiver Beeinflussung der coloristischen Eigenschaften, wie beispielsweise Transparenz bei Volltonlackierungen und Reinheit des Farbtons.

Zur Eignungsprüfung werden die in den nachfolgenden Beispielen beschriebenen Verbindungen der Formel (I) entweder auf Pigmente aufgebracht oder sie werden zur Dispergierung von Pigmenten in Einbrennlacksystemen eingesetzt. Als Lacksysteme werden aus der Vielzahl der bekannten Systeme ein Alkyd-Melaminharz-Lack (AM) auf Basis eines mittelöligen, nicht-trocknenden Alkydharzes aus synthetischen Fettsäuren und Phthalsäureanhydrid und eines mit Butanol veretherten Melaminharzes sowie ein Acrylharzeinbrennlack auf Basis einer nicht-wäßrigen Dispersion (TSA-NAD) ausgewählt. An den mit diesen Lacken erstellten Einbrennlackierungen werden die anwendungstechnischen Eigenschaften, insbesondere der Glanz, geprüft. Die Glanzmessung erfolgt an Folienaufgüssen unter einem Winkel von 20° nach DIN 67530 (ASTM D 523) mit dem "Multigloss"-Glanzmeßgerät der Firma Byk. In nahezu allen Fällen führt die Verwendung der erfindungsgemäßen Pigmentzubereitungen zu einer deutlichen Erniedrigung der Viskosität der pigmentierten Lacke, insbesondere der hochpigmentierten Lacke.

In den nachfolgenden Herstellungs- und Anwendungsbeispielen beziehen sich Teile auf Gewichtsteile. Volumenteile verhalten sich zu Gewichtsteilen wie Kilogramm zu Liter.

Viskositätsangaben für die pigmentierten Lacke in den Beispielen beziehen sich auf Messungen mit dem Rotationsviskosimeter RV3 (Fa. Haake) bei 20 °C und sind in Millipascalsekunden (mPas) angegeben. Angaben zu Schmelzpunkten der Verbindungen der Formel (I) beziehen sich auf Messungen auf der Heizbank (Fa. Reichert).

### Herstellungsbeispiele für Verbindungen der Formel (I)

1) 5,5 Teile Cyanurchlorid werden in einem Rührgefäß in 80 Teilen Xylol bei Raumtemperatur suspendiert und danach mit einer 50°C warmen Lösung von 12,6 Teilen 3-Amino-N-9-ethylcarbazol in 40 Teilen Xylol langsam versetzt. Das Reaktionsgemisch wird anschließend 4 Stunden bei 125°C gerührt. Nach Abkühlen auf etwa 40°C Innentemperatur werden 1,7 Teile Hexamethylendiamin, gelöst in 10 Teilen Xylol, innerhalb von 15 Minuten zugegeben. Nach weiteren 4 Stunden Rühren bei 110°C wird das Reaktionsprodukt durch Filtration isoliert, mit Xylol gewaschen und getrocknet. Das getrocknete Produkt wird in wäßrig-alkalischer Lösung bei pH 9,5 bis 11 eine Stunde lang bei Raumtemperatur verrührt, abfiltriert, mit Wasser neutral gewaschen und getrocknet. Das Produkt hat einen Schmelzpunkt von etwa 216 °C.
   Das Produkt besitzt sehr gute Dispergiereigenschaften und eignet sich hervorragend zum Herstellen von flockungsstabilen Pigmentzubereitungen.
   1a) Verfährt man analog Herstellungsbeispiel 1, ersetzt jedoch Hexamethylendiamin durch 3,8 Teile 1-(3-Aminopropyl)-imidazol, so erhält man ein Produkt mit geringfügig verbesserten Dispergiereigenschaften; Schmelzpunkt 310 °C.
   1b) Ersetzt man in Herstellungsbeispiel 1 Hexamethylendiamin durch 8,4 Teile Oleylamin (Zusammensetzung: 83 % C₁₈, 12 % C₁₆, 4 % C₁₄, 1 % C₁₂; Jodzahl 78±5), so wird ein Produkt mit vergleichbaren Dispergiereigenschaften erhalten; Schmelzpunkt 266 °C.
   1c) Ersetzt man in Herstellungsbeispiel 1 Hexamethylendiamin durch 1,8 Teile Ethanolamin, so erhält man ein Produkt mit ähnlich guten Dispergiereigenschaften; Schmelzpunkt 227 °C.
   1d) Ersetzt man in Herstellungsbeispiel 1 Hexamethylendiamin durch 2,2 Teile Diethylamin, so wird ein Produkt mit vergleichbarer Dispergierwirkung erhalten; Schmelzpunkt 255 °C.
   1e) Verfährt man wie in Beispiel 1, setzt jedoch an Stelle von Hexamethylendiamin 2,7 Teile N,N-Dimethylaminoethanol ein und verwendet Diethylenglykoldimethylether als Lösungsmittel, so erhält man ein Produkt mit vergleichbar guten Dispergiereigenschaften; Schmelzpunkt 234 °C.
   1f) Ersetzt man in Herstellungsbeispiel 1 Hexamethylendiamin durch 2,8 Teile Anilin und verwendet o-Dichlorbenzol als Lösungsmittel, so wird ein Produkt mit vergleichbaren Dispergiereigenschaften erhalten; Schmelzpunkt 206 °C.
   1g) Ersetzt man in Beispiel 1 Hexamethylendiamin durch 2,6 Teile Morpholin und verwendet Chlorbenzol als Lösungsmittel, so erhält man ein Produkt mit geringfügig verschlechterter Dispergierwirkung; Schmelzpunkt 221 °C.
   1h) Verfährt man analog Herstellungsbeispiel 1a, doch setzt das Cyanurchlorid mit 6,3 Teilen 3-Amino-N-9-ethylcarbazol und 7,6 Teilen 1-(3-Aminopropyl)-imidazol um, so wird ein Produkt mit vergleichbarer Dispergierwirkung erhalten; Schmelzpunkt 202 °C.
2) In einem Rührgefäß mit Rückflußkühler, Innenthermometer und Rührer werden 5,5 Teile Cyanurchlorid in 60 Teilen Dioxan unter Rühren bei Raumtemperatur suspendiert. Danach werden 10,9 Teile 3-Aminocarbazol, gelöst in 30 Teilen Dioxan, langsam zugegeben und das Reaktionsgemisch 4 Stunden unter Rückfluß erhitzt. Nach Abkühlen der Reaktionsmischung auf 40 °C werden 3,9 Teile N,N-Diethylaminopropylamin, gelöst in 10 Teilen Dioxan, innerhalb von 10 Minuten zugegeben und weitere 4 Stunden unter Rückfluß erhitzt. Nach Abfiltrieren des Reaktionsprodukts, Waschen und Trocknen, wird das getrocknete Produkt in wäßriger alkalischer Lösung bei etwa pH 10 eine Stunde bei Raumtemperatur verrührt, isoliert, neutralgewaschen und getrocknet. Der Schmelzpunkt des Produkts beträgt etwa 198 °C.
   2a) Ersetzt man in Herstellungsbeispiel 2 N,N-Diethylaminopropylamin durch 3,8 Teile 1-(3-Aminopropyl)-imidazol und verwendet Xylol als Lösungsmittel, so erhält man ein Produkt mit vergleichbaren Dispergiereigenschaften; Schmelzpunkt 234 °C.
3) In einem Rührgefäß mit Rührer, Rückflußkühler und Innenthermometer werden 5,5 Teile Cyanurchlorid in 100 Teilen Xylol unter Rühren suspendiert. Danach wird eine 60°C warme Lösung von 14,4 Teilen 2-(4-Aminophenyl)-6-methylbenzthiazol in 30 Teilen Xylol langsam zugegeben und die Reaktionsmischung 5 Stunden bei Temperaturen zwischen 120 und 130 °C erhitzt. Nach Abkühlen auf 40 °C Innentemperatur werden 3 Teile 1,4-Bis-(3-aminopropyl)-piperazin, gelöst in 10 Teilen Xylol, innerhalb von 20 Minuten zugegeben und weitere 5 Stunden bei 110 °C erhitzt. Das ausgefallene Reaktionsprodukt wird abfiltriert, mit Xylol gewaschen und getrocknet. Danach wird das getrocknete Produkt in wäßrig-alkalischer Lösung bei einem pH-Wert von 9,5 bis 10,5 eine Stunde lang bei Raumtemperatur verrührt, isoliert, neutralgewaschen und getrocknet; Schmelzpunkt 316 °C.
   3a) Ersetzt man in Beispiel 3 1,4-Bis-(3-aminopropyl)-piperazin durch 3,9 Teile 1-(2-Aminoethyl)-piperazin, so erhält man ein Produkt mit vergleichbaren Dispergiereigenschaften; Schmelzpunkt 262 °C.
   3b) Verfährt man analog Beispiel 3, setzt jedoch 3,0 Teile 4,4′-Diaminodiphenylmethan anstelle von 1,4-Bis-(3-aminopropyl)-piperazin ein, so wird ein Produkt mit vergleichbarer Dispergierwirkung erhalten; Schmelzpunkt 262 °C.
   3c) Setzt man in Herstellungsbeispiel 3 9,5 Teile 4-(2-Diethylamino-ethylsulfonyl)-2,5-dimethoxyanilin anstelle von 1,4-Bis-(3-aminopropyl)-piperazin ein, so erhält man ein Produkt mit ähnlichen Dispergiereigenschaften; Schmelzpunkt 184 °C.
   3d) Verfährt man analog Herstellungsbeispiel 3 und setzt 3,9 Teile N,N-Diethylaminopropylamin anstelle von 1,4-Bis-(3-aminopropyl)-piperazin ein, so erhält man ein Produkt mit guten Dispergiereigenschaften und einem Schmelzpunkt von 159 °C.
4) 5,5 Teile Cyanurchlorid werden unter Rühren in 80 Teilen Xylol suspendiert. 10,8 Teile 2-Amino-6-methoxy-benzthiazol, gelöst in 40 Teilen Xylol, werden langsam zu der Suspension gegeben, und die Reaktionsmischung wird 4 Stunden bei 120 °C erhitzt. Nach Abkühlen auf 40 °C Innentemperatur werden 3,9 Teile N,N-Diethylaminopropylamin, gelöst in 10 Teilen Xylol, innerhalb von 15 Minuten zugetropft und weitere 4 Stunden bei 110 °C erhitzt. Danach wird das Reaktionsprodukt aus der Lösung durch Filtrieren isoliert, mit Xylol gewaschen und getrocknet. Das getrocknete Produkt wird in wäßrig-alkalischer Lösung bei pH 9,5 bis 11 eine Stunde lang bei Raumtemperatur verrührt, abfiltriert, neutralgewaschen und getrocknet; Schmelzpunkt 173 °C.
   4a) Verfährt man analog Beispiel 4, verwendet jedoch 9,0 Teile 2-Amino-6-methoxy-benzthiazol und ersetzt N,N-Diethylaminopropylamin durch 4,0 Teile 1,4-Bis-(3-aminopropyl)-piperazin, so wird ein Produkt mit vergleichbarer Dispergierwirkung erhalten; Schmelzpunkt 238 °C.
   4b) Ersetzt man in Beispiel 4 2-Amino-6-methoxy-benzthiazol durch 9,0 Teile 2-Aminobenzthiazol, so erhält man ein Produkt mit geringfügig verbesserten Dispergiereigenschaften; Schmelzpunkt 226 °C.
   4c) ersetzt man in Beispiel 4 N,N-Diethylaminopropylamin durch 3,1 Teile N,N-Dimethylaminopropylamin, so erhält man ein Produkt mit geringfügig verschlechterten Dispergiereigenschaften; Schmelzpunkt 324 °C.
   4d) Ersetzt man in Beispiel 4 2-Amino-6-methoxybenzthiazol durch 16,4 Teile 4-(4-Aminophenyl)-benzophenon und verwendet Chlorbenzol als Lösungsmittel, so erhält man ein Produkt mit ähnlich guten Dispergiereigenschaften; Schmelzpunkt 216 °C.
   4e) Ersetzt man in Beispiel 4 2-Amino-6-methoxybenzthiazol durch 9,5 Teile 4-Aminochinaldin und außerdem N,N-Diethylaminopropylamin durch 3,9 Teile 1-(2-Aminoethyl)-piperazin, so wird ein Produkt mit vergleichbar guten Dispergiereigenschaften erhalten; Schmelzpunkt über 350 °C.
5) 5,5 Teile Cyanurchlorid und 4,5 Teile 5-Aminobenzimidazolon werden in 100 Teilen Xylol suspendiert und die Suspension 2 Stunden bei 125 °C erhitzt. Nach Abkühlen der Reaktionsmischung auf 60 °C werden 7,2 Teile 2-(4-Aminophenyl)-6-methyl-benzthiazol, gelöst in 30 Teilen Xylol, langsam zugegeben und die Reaktionsmischung 4 Stunden bei 125 °C erhitzt. Anschließend werden 3,8 Teile 1-(3-Aminopropyl)-imidazol, gelöst in 10 Teilen Xylol, bei 40 °C Innentemperatur innerhalb von 10 Minuten zugegeben und das Reaktionsgemisch noch 4 Stunden bei 110 °C erhitzt. Das Reaktionsprodukt wird danach abfiltriert, mit Xylol gewaschen und getrocknet. Das getrocknete Produkt wird in wäßrig-alkalischer Lösung bei etwa pH 9,5 eine Stunde bei Raumtemperatur verrührt, neutralgewaschen und getrocknet; Schmelzpunkt über 350 °C.
6) 9,2 Teile Cyanurchlorid werden in einem Rührgefäß in 60 Teilen Methylethylketon gelöst und bei 1-3°C in 30 min mit einer Mischung aus 10,1 Teilen Laurylpropylendiamin, 4,4 Teilen 1-(3-Amino-propyl)-imidazol und 5,9 Teilen 2-(4-Aminophenyl)-6-methyl-benzthiazol in 60 Teilen Methylethylketon tropfenweise versetzt und 30 Minuten nachgerührt. Danach werden 12 Teile 50%iger Natronlage bei 1-3°C in 2 Minuten zugesetzt. Es wird zunächst 1 Stunde bei 50°C und 2 Stunden unter Rückfluß (77°C) erhitzt, danach von anorganischem Salz filtriert und das Filtrat im Rotavapor zur Trockene eingeengt. Man erhält 21,2 Teile eines glasartigen, spröden und mahlfähigen Produkts. Das Produkts besitzt sehr gute Dispergiereigenschaften und eignet sich hervorragend zum Herstellen von flockungsstabilen Pigmentzubereitungen.
7) In einem Rührgefäß werden 11,1 Teile Cyanurchlorid in 70 Teilen Methylisobutylketon suspendiert und die Suspension auf 0°C gekühlt. Innerhalb von 70 Minuten werden 19,0 Teile N,N-Bis-(3-aminopropyl)-talgfettamin (Zusammensetzung des Talgfettrestes: 65 % C₁₈, 30 % C₁₆, 5 % C₁₄, Jodzahl 45±5), 5 ,0 Teile 1-(3-Aminopropyl)-imidazol und 6,7 Teile 2-(4-Aminophenyl)-6methyl-benzthiazol, gelöst in 40 Teilen Methylisobutylketon, bei 1 bis 4°C unter Rühren zugegeben. Anschließend werden bei derselben Temperatur 14,4 Teile 50 %ige wäßrige Natronlage rasch zugegeben. Die Reaktionsmischung wird danach 1 Stunde bei 50°C und 2 Stunden bei 90°C erwärmt. Nach Zugabe von 150 Teilen Methylisobutylketon zum Reaktionsgemisch wird das angefallene Salz abfiltriert und das Lösungsmittel abdestilliert. Es resultiert ein sprödes harzartiges Produkt mit einem Schmelzbereich von 135 - 145°C, welches sehr gute Dispergiereigenschaften aufweist.

### Herstellung und Anwendung der Pigmentzubereitungen

A1) 10 Teile C.I. Pigment Yellow 154 (spezifische Oberfläche nach BET 24 m²/g) werden unter Zusatz von 0,75 Teilen der Verbindung aus dem jeweils in der Tabelle angegebenen Herstellungsbeispiel in 100 Teilen AM-Lack dispergiert. Die damit hergestellten pigmentierten Lackierungen werden eingebrannt und der Glanz gemessen. Die Ergebnisse sind in der folgenden Tabelle aufgeführt:

| Herstellungsbeispiel | Glanz |
|---|---|
| 3d | 80 |
| 4d | 84 |
| 4a | 75 |
| 5 | 77 |
| Vergleich ohne Zusatz | 47 |

A2) In 100 Teilen AM- bzw. TSA-NAD-Lack werden 4 Teile C.I. Pigment Red 122 (spez. Oberfläche nach BET 62 m²/g) unter Zusatz von 0,3 Teilen der Verbindung aus dem in der Tabelle jeweils angegebenen Herstellungsbeispiel dispergiert, die damit hergestellten Lackierungen eingebrannt und der Glanz gemessen. Die Ergebnisse sind in der folgenden Tabelle zusammengefaßt:

| Herstellungsbeispiel | Glanz (AM) | Glanz (TSA-NAD) |
|---|---|---|
| 1a | 81 | 80 |
| 3c | 82 | 80 |
| 3 | 82 | 81 |
| 4b | 83 | 88 |
| 7 | 86 | 91 |
| 3a | 81 | - |
| 2 | 83 | - |
| 3d | 82 | - |
| 4 | 83 | - |
| Vergleich ohne Zusatz | 43 | 53 |

A3) In 100 Teilen AM- bzw. TSA-NAD-Lack werden 3 Teile C.I. Pigment Violet 23 (spez, Oberfläche nach BET 86 m²/g) unter Zusatz von 0,3 Teilen der Verbindung aus dem in der Tabelle jeweils angegebenen Herstellungsbeispiel dispergiert, die damit hergestellten Lackierungen eingebrannt und der Glanz gemessen. Die Ergebnisse sind in der folgenden Tabelle zusammengefaßt:

| Herstellungsbeispiel | Glanz (AM) | Glanz (TSA-NAD) |
|---|---|---|
| 1 | 80 | - |
| 1a | 84 | 74 |
| 1b | 80 | - |
| 1c | 85 | 74 |
| 1e | 80 | - |
| 1f | 82 | - |
| 1g | 81 | - |
| 1h | 83 | 73 |
| 3 | 82 | 64 |
| 3a | 82 | - |
| 3c | 85 | - |
| 3d | 83 | 63 |
| 4 | 86 | 77 |
| 4a | 81 | 64 |
| 4b | 86 | 76 |
| 4d | 81 | - |
| Vergleich ohne Zusatz | 16 | 46 |

A4) 30 Teile C.I. Pigment Violet 23, C.I. Nr. 51319, welches noch 20 % bei der Synthese angefallenes Salz enthält, werden mit 2,4 Teilen der Verbindung aus Herstellungsbeispiel 1a gemischt und mit 1575 Teilen zylindrischer Korundmahlkörper (Durchmesser 12 mm) in einer Schwingmühle (Typ Vibratom, Fa. Siebtechnik Mühlheim) 4 Stunden lang gemahlen (Umdrehungszahl 1400 U/min, Schwingkreis 4mm). Danach wird das Mahlgut abgesiebt und die gleiche Mahlung zweimal wiederholt. 84 Teile des Mahlguts werden nun in ein Rührgefäß eingetragen, in dem 126 Teile 85 %iges Isobutanol und 16,8 Teile 98 bis 100 %ige Ameisensäure vorgelegt sind. Nach 20 Stunden Rühren bei 20 bis 25 °C werden 504 Teile Wasser zugegeben und anschließend das Isobutanol bis zu einer Übergangstemperatur von 100 °C azeotrop abdestilliert. Der Destillationsrückstand wird filtriert und der Filterkuchen neutral gewaschen. Man erhält 133,7 Teile Pigmentpreßkuchen, der mit 454,3 Teilen Wasser und 210 Teilen 85 %igem Isobutanol in einem Autoklaven angerührt wird. Die Suspension wird 3 Stunden auf 125 °C erhitzt. Man läßt dann auf 90 °C abkühlen und destilliert das Isobutanol bis zu einer Übergangstemperatur von 100 °C azeotrop ab. Der Destillationsrückstand wird filtriert, der Filterkuchen mit Wasser gewaschen und bei 80 °C getrocknet. Es resultieren 63,8 Teile Pigment, welches sich hervorragend zum Färben von Lacken, plastischen Massen und Druckfarben eignet, wobei sich die pigmentierten Lacke insbesondere durch eine niedrige Viskosität, auch bei hohen Pigmentkonzentrationen, sowie durch eine überragende Flockungsstabilität auszeichnen. Der Glanzwert in einem AM-Lack beträgt 83, während der unpräparierte Vergleich nur 52 ergibt.
A5) Verfährt man wie in Beispiel A4, setzt aber beim Pigmentfinish noch 4 Teile eines handelsüblichen Dispergiermittels auf Basis eines Alkylphenolpolyglykolethersulfats zu, so erhält man 63,1 Teile einer Pigmentzubereitung, die sich durch eine gute Flockungsstabilität und eine niedrige Viskosität in pigmentierten Lacken auszeichnet. Der Glanzwert in einem TSA-NAD-Lack beträgt 75, während der unpräparierte Vergleich einen Glanzwert von 58 aufweist.
A6) Man wiederholt zunächst die Schwingmahlung analog Beispiel A4, jedoch ohne Zusatz der Verbindung aus Herstellungsbeispiel 1a. Es resultieren 84 Teile Mahlgut. In einem Rührgefäß werden 75 Teile Isobutanol (85 %ig), 10 Teile Ameisensäure (98 bis 100 %ig), 2 Teile eines handelsüblichen Dispergiermittels auf Basis Alkylphenolpolyglykolethersulfat und 4 Teile der Verbindung aus Herstellungsbeispiel 1a vorgelegt. Unter Rühren werden 50 Teile Mahlgut eingetragen und 20 Stunden bei 20 bis 25 °C nachgerührt. Dann werden 300 Teile Wasser zugegeben und die Suspension 5 Stunden zum Sieden erhitzt. Anschließend wird das Isobutanol bis zu einer Übergangstemperatur von 100 °C azeotrop abdestilliert. Der Destillationsrückstand wird filtriert, der Filterkuchen neutralgewaschen und getrocknet. Man isoliert 43,3 Teile einer Pigmentzubereitung, die in dem AM-Lack einen Glanzwert von 88 ergibt, während der unpräparierte Vergleich einen Glanzwert von nur 18 aufweist.
A7) 9 Teile C.I. Pigment Violet 23, C.I. Nr. 51319, und 1 Teil der Verbindung aus Herstellungsbeispiel 1a werden auf einer Labormühle gemischt. Der Folienaufguß der Probe (TSA-NAD-Lack) liefert einen Glanzwert von 70, während die unpräparierte Vergleichsprobe einen Wert von 34 ergibt.
A8) 9 Teile C.I. Pigment Violet 23, und 1 Teil der Verbindung aus Herstellungsbeispiel 1 werden auf einer Labormühle gemischt. Der Folienaufguß der Probe (TSA-NAD-Lack) liefert einen Glanzwert von 63, während die unpräparierte Vergleichsprobe einen Wert von 34 ergibt.
A9) Verfährt man wie in A5, ersetzt jedoch die dort verwendete Verbindung aus Herstellungsbeispiel 1a durch 2,4 Teile der Verbindung aus Herstellungsbeispiel 3d, werden 64,1 Teile Pigmentzubereitung erhalten, die in einem TSA-NAD-Lack einen Glanzwert von 76 ergibt, während der unpräparierte Vergleich nur einen Glanzwert von 37 aufweist.
A10) Verfährt man wie in A5, ersetzt jedoch die Verbindung aus Herstellungsbeispiel 1a durch 2,4 Teile der Verbindung aus Herstellungsbeispiel 4b, so erhält man 62,9 Teile einer Pigmentzubereitung, die in einem AM-Lack einen Glanzwert von 82 aufweist, während der unpräparierte Vergleich nur einen Glanzwert von 16 ergibt.
A11) Verfährt man wie in A5, ersetzt jedoch die Verbindung aus Beispiel 1a durch 2,4 Teile der Verbindung aus Beispiel 4, isoliert man 64,2 Teile einer Pigmentzubereitung, die in einem AM-Lack einen Glanz von 87 ergibt, während der unpräparierte Vergleich einen Glanz von 16 ergibt.
A12) Verfährt man wie in Beispiel A5, ersetzt jedoch die Verbindung aus Beispiel 1a durch 2,4 Teile der Verbindung aus Beispiel 3a, so erhält man 63,7 Teile einer Pigmentzubereitung. Glanzwert (AM-Lack): 85; Glanzwert für den unpräparierten Vergleich: 16.
A13) 9 Teile C.I. Pigment Violet 23 und 1 Teil der Verbindung aus Beispiel 3 werden auf einer Labormühle gemischt. Der Folienaufguß der Probe (AM-Lack) liefert einen Glanzwert von 83, der unpräparierte Vergleich ergibt nur einen Wert von 10.
A14) 9 Teile C.I. Pigment Violet 23, und 1 Teil der Verbindung aus Beispiel 2 werden auf einer Labormühle gemischt. Der Folienaufguß der Probe (AM-Lack) liefert einen Glanzwert von 85; der unpräparierte Vergleich hat nur einen Wert von 10.
A15) 19 Teile C.I. Pigment Red 179, C.I. Nr. 71130, und ein Teil der Verbindung aus Beispiel 4b werden auf einer Labormühle gemischt. Ein aus der erhaltenen Pigmentzubereitung hergestelltes 15 %iges Pigmentkonzentrat mit einem TSA-NAD-Lack als Medium zeichnet sich durch eine besonders niedrige Viskosität aus, während die unpräparierte Vergleichsprobe eine sehr hohe Viskosität besitzt. Die Viskositäten des Pigmentkonzentrats bei verschiedenen Drehfrequenzen des Rotationsviskosimeters sind in der Tabelle den Werten des unpräparierten Vergleichs gegenübergestellt:

| Drehfrequenz [min⁻¹] | Viskosität (Probe) | Viskosität (unpräparierter Vergleich) |
|---|---|---|
| 31,25 | 112,6 | 185 |
| 62,5 | 92,5 | 172,9 |
| 125 | 82,4 | 166,7 |
| 250 | 77,4 | 161,9 |

A16) In 1000 Teile Wasser werden 50 Teile Perylen-3,4,9,10-tetracarbonsäuredianhydrid als feuchter Preßkuchen und 7,5 Teile der Verbindung aus Beispiel 4 als feuchter Preßkuchen eingetragen. Nach Abkühlen der Suspension auf 0 °C werden innerhalb von 10 Minuten 74 Teile einer 45,5 %igen wäßrigen Monomethylaminlösung zugetropft. Es wird noch 15 Minuten bei 0 bis 5 °C nachgerührt und anschließend innerhalb von 15 Minuten bei ca. 0 °C eine Lösung von 28,3 Teilen wasserfreiem Calciumchlorid in 83,3 Teilen Wasser zugegeben. Nach einer Stunde Nachrühren bei 0 °C wird die Suspension auf 80 °C erwärmt und 2 Stunden bei dieser Temperatur gehalten. Danach wird die Pigmentzubereitung isoliert, neutralgewaschen und getrocknet. Man erhält 56,2 Teile einer Zubereitung von C.I. Pigment Red 179. Ein aus der Pigmentzubereitung hergestelltes 15 %iges Pigmentkonzentrat in einem TSA-NAD-Lack zeichnet sich durch eine sehr niedrige Viskosität aus, während die unpräparierte Vergleichsprobe eine sehr hohe Viskosität besitzt. Die Viskositäten des Pigmentkonzentrats bei verschiedenen Drehfrequenzen des Rotationsviskosimeters sind in der folgenden Tabelle den Werten des unpräparierten Vergleichs gegenübergestellt:

| Drehfrequenz [min⁻¹] | Viskosität (Probe) | Viskosität (unpräparierter Vergleich) |
|---|---|---|
| 31,25 | 132,3 | 192,8 |
| 62,5 | 109,7 | 181,5 |
| 125 | 98,2 | 176,0 |
| 250 | 92,3 | 172,2 |

A17) 30 Teile Indanthren-Bordo RR (C.I. Vat Red 15, α-Modifikation) von 99 %iger Reinheit werden in 470 Teile Chlorbenzol eingetragen. Nach Zugabe von einem Teil 33 %iger Natronlage läßt man eine Stunde bei 20 bis 30 °C Rühren. Danach erhitzt man zu Sieden und hält 3 Stunden am Rückfluß. Anschließend kühlt man auf 80 °C ab, fügt 1,5 Teile der Verbindung aus Beispiel 1a hinzu und rührt eine Stunde bei 70 bis 80 °C nach. Nach Zugabe von Wasser wird das Chlorbenzol azeotrop abdestilliert, die von Chlorbenzol befreite wäßrige Suspension filtriert, und der Filterrückstand mit heißem Wasser gewaschen. Die Pigmentzubereitung wird bei 60 bis 70 °C getrocknet und gemahlen. Man erhält 31,5 Teile einer Zubereitung des Pigments in der β-Modifikation. Ein damit pigmentierter AM-Lack weist den guten Glanzwert von 87 auf, während der unpräparierte Vergleich nur einen Wert von 25 besitzt.
A18) Verfährt man nach A17, verwendet jedoch 0,9 Teile der Verbindung aus Beispiel 1a anstelle von 1,5 Teilen, so ergibt der Folienaufguß der Probe (AM-Lack) einen Glanzwert von 82.
A19) Ersetzt man in A17 die 1,5 Teile der Verbindung aus Herstellungsbeispiel 1a durch 1,5 Teile der Verbindung aus Herstellungsbeispiel 3d, weist der Folienaufguß der Probe (AM-Lack) einen Glanzwert von 85 auf.
A20) 131 Teile 26 %iges wäßrig-feuchtes neutrales rohes 2,9-Dimethylchinacridon (C.I. Pigment Red 122, C.I. Nr. 73915), welches durch Ringschluß von 2,5-Di-(p-methylphenylamino)-terephthalsäure in Polyphosphorsäure bei 125 °C und anschließender Hydrolyse mit Wasser von 20 °C erhältlich ist, werden in 200 Teilen Isobutanol, 37 Teilen Wasser und 5 Teilen 33 %iger Natronlauge suspendiert und im geschlossenen Gefäß 3 Stunden bei 130 °C gerührt. Danach läßt man auf 55 °C abkühlen und eine Lösung aus 3,7 Teilen der Verbindung aus Beispiel 4b, gelöst in 30 Teilen N-Methyl-pyrrolidon-(2), zutropfen und weitere 2 Stunden rühren. Anschließend wird das Isobutanol mit Wasserdampf abdestilliert, das beschichtete Pigment durch Filtration isoliert und bei 80 °C getrocknet. Es werden 37,5 Teile eines Magenta-Pigments mit hervorragenden rheologischen und coloristischen Eigenschaften erhalten. Ein damit pigmentierter AM-Lack weist den sehr guten Glanzwert von 94 im Vergleich zu einem Glanzwert von 23 für den unpräparierten Vergleich auf.
A21) 130 Teile 25,4 %iges wäßrig-feuchtes neutrales rohes 2,9-Dimethylchinacridon, (C.I. Pigment Red 122), hergestellt wie in A20 beschrieben, werden in 200 Teilen Isobutanol und 45 Teilen Wasser suspendiert, die Suspension wird auf 50 °C erwärmt, mit 2,5 Teilen der Verbindung aus Beispiel 2a, gelöst in 15 Teilen N-Methylpyrrolidon-(2), innerhalb von 20 Minuten versetzt und für 2 Stunden am Rückfluß erhitzt. Danach wird mit verdünnter Natronlauge auf pH 8,5 gestellt und die Suspension 3 Stunden bei 125 °C im geschlossenen Gefäß erhitzt. Nach Abdestillieren des Isobutanols mit Wasserdampf wird das beschichtete Pigment durch Filtration isoliert und bei 80 °C getrocknet. Man erhält 33,6 Teile eines Magenta-Pigments mit hervorragenden anwendungstechnischen Eigenschaften. Ein damit pigmentierter AM-Lack weist einen Glanzwert von 88 auf. Der unpräparierte Vergleich weist demgegenüber nur einen Glanzwert von 25 auf.
A22) Zu 100 Teilen einer 5%igen Suspension von C.I. Pigment Yellow 154 werden bei Raumtemperatur 10 Teile einer Mischung bestehend aus 116 Teilen 85%iger Phosphorsäure, 182 Teilen 33%iger Natronlauge und 702 Teilen Wasser zugesetzt. Anschließend wird auf 60°C geheizt und eine Lösung aus 1 Teil der Verbindung aus Beispiel 6) und 8 Teilen Essigsäure in ca. 10 Minuten zugetropft. Es wird 30 Minuten bei 60°C und 30 Minuten ohne Heizung nachgerührt, durch Eiszugabe auf 20°C gekühlt, abgesaugt, portionsweise mit insgesamt 500 Teilen Wasser gewaschen und bei 65°C im Umluftschrank getrocknet. Es resultieren 21 Teile einer Pigmentzubereitung, welche sich hervorragend zum Färben von Lacken, plastischen Massen und Druckfarben eignet, wobei sich die pigmentierten Lacke insbesondere durch eine niedrige Viskosität, auch bei hohen Pigmentkonzentrationen, sowie durch eine überragende Flockungsstabilität auszeichnen. Der Glanzwert im AM-Lack beträgt 85, während der unpräparierte Vergleich nur einen Glanzwert von 31 ergibt.

## Patentansprüche

1. Pigmentzubereitung, gekennzeichnet durch einen Gehalt an a) einem oder mehreren Pigmenten und b) an einer oder mehreren farblosen oder wenig gefärbten Verbindungen der allgemeinen Formel (I) 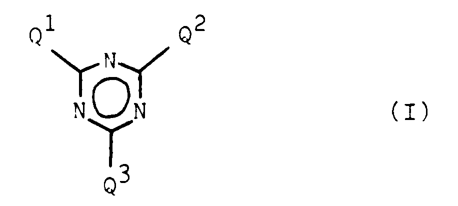 in der Q¹, Q² und Q³ unabhängig voneinander jeweils einen Rest -X-A, -OR¹, -SR¹, Halogen, -NR²R³ oder einen Rest Q aus einer, zwei oder bis zu fünfzehn trivalenten Gruppen der Formel (Ia) 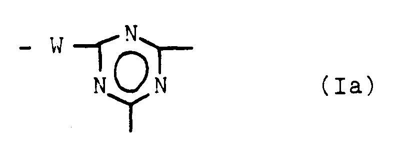 die jeweils über die divalente Gruppe W mit einer freien Valenz der nächsten Gruppe der Formel (Ia) oder mit dem Triazinring des Grundkörpers der Formel (I) sowie an den übrigen freien Valenzen jeweils mit einem Rest -X-A, -OR¹, -SR¹, Halogen oder -NR²R³ verbunden sind und die im Falle von mehr als zwei Gruppen der Formel (Ia) linear oder verzweigt miteinander verbunden sind, bedeuten,
wobei mindestens ein Rest der Formel -X-A in der Verbindung der Formel (I) vorhanden ist und
A für den Rest eines aromatischen Ringsystems mit 2 bis 6 ankondensierten Ringen und mit insgesamt mindestens 9 Ringatomen oder für den Rest einer Gruppe von 2 bis 3 verbundenen aromatischen Ringsystemen aus jeweils einem Ring oder 2 bis 4 ankondensierten Ringen mit jeweils 5 bis 7 Ringatomen pro Ring, in der die verbundenen aromatischen Ringsysteme über eine direkte Bindung oder eine divalente Gruppe aus der Reihe -O-, -S-, -CO-, -SO-, -SO₂- und C₁-C₁₂-Alkylen verbunden sind, oder für einen der genannten Reste, die einen oder mehrere Substituenten aus der Reihe C₁-C₂₄-Alkyl, -OR′, Halogen, -NR′R˝, -COOR′, -CONR′R˝, -NR′COR˝, -CN, -CF₃ und -NO₂ aufweisen, worin R′ und R˝ unabhängig voneinander Wasserstoff oder ein geradkettiges oder verzweigtes C₁-C₁₂-Alkyl oder zusammen mit dem N-Atom einen 5- oder 6-gliedrigen Heterocyclus bedeuten, steht,
X für eine divalente Gruppe -NR*-, -O- oder -S-, worin R* einen Rest aus der Reihe Wasserstoff, C₁-C₆-Alkyl, C₁-C₆-Hydroxyalkyl, (C₁-C₄-Alkoxy)-C₁-C₆-alkyl und C₅-C₇-Cycloalkyl bedeutet, steht,
R¹, R² und R³ unabhängig voneinander für den Rest Wasserstoff, geradkettiges oder verzweigtes C₁-C₂₄-Alkyl oder C₂-C₂₄-Alkenyl, C₅-C₁₂-Cycloalkyl mit ein oder zwei Ringen, C₇-C₁₈-Aralkyl, Heteroaryl mit 1 oder 2 Ringen und insgesamt 5 bis 8 Ringatomen, Phenyl,
einen Phenylrest, der durch mindestens einen Rest aus der Gruppe C₁-C₁₂-Alkyl, Halogen, -OR⁴, -NR⁴R⁵, -COOR⁴, -CONR⁴R⁵, -NR⁵COR⁴, -CN, -CF₃, -NO₂ und
-T-(CH₂)ₚ-NR^{o}R^{t} substituiert ist, wobei
R⁴ und R⁵ unabhängig voneinander Wasserstoff oder C₁-C₂₄-Alkyl, R^{o} und R^{t} unabhängig voneinander C₁-C₂₄-Alkyl, p eine Zahl von 1 bis 6 und T eine direkte Bindung oder eine divalente Gruppe aus der Reihe -O-, -S-, -CO-, -SO-, -SO₂-, -NR^{a}-, -NR^{a}CO-, -NR^{a}SO₂-, -SO₂NR^{a}- und -CONR^{a}- und
R^{a} Wasserstoff oder eine C₁-C₁₂-Alkylgruppe bedeuten,
oder für C₁-C₁₂-Hydroxyalkyl oder -Polyhydroxyalkyl oder für einen C₁-C₃₀-Alkylrest, der in der Kette durch eine oder mehrere nicht nebeneinanderstehende divalente Gruppen der Formel -O- oder -NR^{v}-, worin R^{v} Wasserstoff oder C₁-C₂₄-Alkyl bedeutet, oder eine Kombination von mindestens zwei der divalenten Gruppen unterbrochen ist und der durch einen 5- oder 6-gliedrigen heterocyclischen Ring substituiert sein kann, stehen oder
R¹ die obengenannte Bedeutung hat und R² und R³ zusammen mit dem N-Atom für einen 5- oder 6-gliedrigen Ring eines heterocyclischen Systems mit ein oder zwei Ringen stehen sowie
W eine divalente Gruppe der Formel -NR^{s}-Y-NR^{t}-, -O-Y-O-, -O-Y-NR^{s}-, -S-Y-S-, -O-Y-S- oder -NR^{s}-Y-S- darstellt, wobei in den vorstehenden Formeln Y für eine geradkettige oder verzweigte C₂-C₂₀-Alkylengruppe oder eine C₂-C₂₀-Alkylengruppe, die durch eine oder mehrere Gruppen -O-, -S-, -NR^{u}-, worin R^{u} Wasserstoff oder C₁-C₂₄-Alkyl, bedeutet, -CO-, -SO-, -SO₂-, C₅-C₇-Cycloalkylen, C₅-C₁₀-Arylen, einen divalenten heterocyclischen Ring mit 5 bis 7 Ringatomen oder eine Kombination der vorstehenden Gruppen unterbrochen ist und die weiter nicht substituiert ist oder weiter substituiert ist, oder für ein divalentes 1-, 2- oder 3-kerniges gesättigtes, ungesättigtes oder aromatisches carbocyclisches oder heterocyclisches Ringsystem mit 5 bis 14 Ringatomen oder zwei der Ringsysteme, die über eine direkte Bindung oder eine Gruppe C₁-C₆-Alkylen, -O-, -S-, -CO-, -SO- oder -SO₂- verknüpft sind, wobei die Ringsysteme nicht weiter substituiert oder weiter substituiert sind, steht und
R^{s} und R^{t} unabhängig voneinander einen Rest Wasserstoff, C₁-C₂₄-Alkyl, C₁-C₆-Hydroxyalkyl, (C₁-C₄-Alkoxy)-C₁-C₆-alkyl oder Cycloalkyl bedeuten oder zusammen mit N-Y-N einen heterocyclischen Ring bedeuten.

2. Pigmentzubereitung nach Anspruch 1, gekennzeichnet durch einen Gehalt an einer Verbindung der Formel (I), in der Q¹, Q² und Q³ unabhängig voneinander jeweils einen Rest der Formel -X-A, -NR²R³ oder einen Rest Q aus 1 bis 15 trivalenten Gruppen der Formel (Ia), die jeweils über eine divalente Gruppe W mit einer freien Valenz der nächsten Gruppe der Formel (Ia) oder mit dem Triazinrest des Grundkörpers der Formel (I) sowie an den übrigen freien Valenzen jeweils mit einem Rest -X-A oder -NR²R³ verbunden sind und die im Falle von mehr als zwei Gruppen der Formel (Ia) linear oder verzweigt miteinander verbunden sind, bedeuten, wobei mindestens ein Rest der Formel -X-A in der Verbindung der Formel (I) vorhanden ist.

3. Pigmentzubereitung nach Anspruch 1 oder 2, gekennzeichnet, durch einen Gehalt an einer Verbindung der Formel (I), in der A für den Rest eines aromatischen Ringsystems mit 2 oder 3 ankondensierten Ringen mit 9 bis 14 Ringatomen oder für den Rest einer Gruppe von 2 aromatischen Ringsystemen mit jeweils einem Ring oder zwei ankondensierten Ringen mit jeweils 5 bis 7 Ringatomen pro Ring, in der die verbundenen aromatischen Systeme über eine direkte Bindung oder eine divalente Gruppe aus der Reihe -O-, -CO-, -SO₂- und -CH₂- verbunden sind, oder für einen der genannten Reste, die einen bis drei Reste aus der Reihe C₁-C₂₄-Alkyl, -OR′, Halogen, -NR′R˝, -COOR′, -CONR′R˝, -NR′COR˝, -CN, CF₃ oder -NO₂ aufweisen, worin R′ und R˝ unabhängig voneinander Wasserstoff oder C₁-C₄-Alkyl oder zusammen mit dem N-Atom einen Heterocyclus bedeuten, steht und X für eine divalente Gruppe -NR*-, -O- oder S, worin R* Wasserstoff oder C₁-C₄-Alkyl bedeutet, steht.

4. Pigmentzubereitung nach mindestens einem der Ansprüche 1 bis 3, gekennzeichnet durch einen Gehalt an einer Verbindung der Formel (I), in der A den Rest eines heteroaromatischen Ringsystems mit 2 oder 3 ankondensierten Ringen mit insgesamt 9 bis 14 Ringatomen und N- oder S-Atomen oder einem Gemisch davon als Heteroatome darstellt, wobei das Ringsystem weiter unsubstituiert ist oder mindestens einen der genannten Substituenten aufweist.

5. Pigmentzubereitung nach mindestens einem der Ansprüche 1 bis 4, gekennzeichnet durch einen Gehalt an einer Verbindung der Formel (I), in der R¹, R² und R³ unabhängig voneinander für den Rest Wasserstoff, geradkettiges oder verzweigtes C₁-C₁₂-Alkyl oder C₃-C₁₂-Alk-(2-11)-enyl, C₅-C₇-Cycloalkyl, C₇-C₁₂-Phenylalkyl, Heteroaryl mit 5 oder 6 Ringatomen, Phenyl, einen Phenylrest, der durch 1 bis 3 Reste aus der Gruppe C₁-C₁₂-Alkyl, Cl, -OR⁴, -NR⁴R⁵ und -T-(CH₂)ₚ-NR^{o}R^{t} substituiert ist, wobei R⁴ und R⁵ unabhängig voneinander Wasserstoff oder C₁-C₄-Alkyl, R^{o} und R^{t} unabhängig voneinander C₁-C₁₂-Alkyl, p eine Zahl von 1 bis 6 und T eine direkte Bindung oder eine divalente Gruppe aus der Reihe -SO₂-, -SO₂NR^{a}- und -CONR^{a}- bedeuten, oder für C₁-C₆-Hydroxyalkyl, (C₁-C₄-Alkoxy)-C₁-C₁₂-Alkyl, insbesondere (C₁-C₄-Alkoxy)-C₁-C₆-alkyl, oder für einen Rest der Formel -(CR⁶R⁷)_{q}-NR⁸R⁹, worin q eine Zahl von 1 bis 6, insbesondere 1 bis 3, R⁶ und R⁷ unabhängig voneinander Wasserstoff oder C₁-C₆-Alkyl, vorzugsweise Wasserstoff, sowie R⁸ und R⁹ unabhängig voneinander C₁-C₂₄-Alkyl oder R⁸ Wasserstoff und R⁹ C₁-C₂₄-Alkyl
oder R⁸ und R⁹ zusammen mit dem N-Atom eine 5- oder 6-gliedrigen Ring eines heterocyclischen Systems bedeuten, stehen oder R¹ die obengenannte Bedeutung hat und R² und R³ zusammen mit dem N-Atom für einen gesättigten, ungesättigten oder aromatischen heterocyclischen Ring mit 5 oder 6 Ringatomen, der weiter nicht substituiert oder weiter substituiert ist, stehen.

6. Pigmentzubereitung nach mindestens einem der Ansprüche 1 bis 5, gekennzeichnet durch einen Gehalt an einer Verbindung der Formel (I), in der
W eine Gruppe der Formel -NR^{s}-Y-NR^{t}- darstellt, wobei Y für eine geradkettige C₂-C₈-Alkylengruppe oder eine C₂-C₁₂-Alkylengruppe, die durch eine oder mehrere divalente Gruppen -O-, -S-, -NR 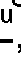 , worin R^{u} Wasserstoff oder C₁-C₁₈-Alkyl bedeutet, -CO-, -SO-, -SO₂- oder einen divalenten heterocyclischen Rest mit 5 bis 7 Ringatomen oder eine Kombination der vorstehenden Gruppen unterbrochen ist, oder für ein divalentes ein- oder zweikerniges carbocyclisches oder heterocyclisches Ringsystem mit 5 bis 8 Ringatomen steht oder für zwei der Ringsysteme, die über eine direkte Bindung oder eine Gruppe -CH₂-, -CH(CH₃)-, -C(CH₃)₂-, -O-, -S-, -CO-, -SO- oder -SO₂- verknüpft sind, wobei die Ringsysteme nicht weiter substituiert oder weiter substituiert sind, steht und R^{s} und R^{t} Wasserstoff oder C₁-C₁₈-Alkyl bedeuten.

7. Pigmentzubereitung nach mindestens einem der Ansprüche 1 bis 5, gekennzeichnet durch einen Gehalt von 0,3 bis 10 mg Verbindung der Formel (I) pro Quadratmeter Pigmentoberfläche.

8. Pigmentzubereitung nach mindestens einem der Ansprüche 1 bis 7, gekennzeichnet im wesentlichen durch den Gehalt an
a) mindestens einem organischen Pigment,
b) 0,2 bis 30 Gew.-% Verbindung der Formel (I),
c) 0 bis 20 Gew.-% eines anionaktiven, kationaktiven oder nichtionogenen Tensids,
d) 0 bis 20 Gew.-% üblicher Zusatzstoffe,
wobei die Anteile der Bestandteile b), c) und d) auf das Gewicht des Pigments oder der Pigmente bezogen sind.

9. Verfahren zur Herstellung der nach mindestens einem der Ansprüche 1 bis 8 definierten Pigmentzubereitungen, dadurch gekennzeichnet, daß die Oberfläche der Pigmente mit einer oder mehreren Verbindungen der Formel (I) beschichtet wird.

10. Verwendung der nach mindestens einem der Ansprüche 1 bis 8 definierten Pigmentzubereitungen zum Pigmentieren und Färben natürlicher und synthetischer Materialien, insbesondere zum Einfärben von Kunststoffen und hochmolekularen Materialien oder bei der Herstellung von Druckfarben oder Anstrichfarben, insbesondere Einbrennlacken.

## Claims

1. A pigment formulation which contains a) one or more pigments and b) one or more colorless or only slightly colored compounds of the formula (I) 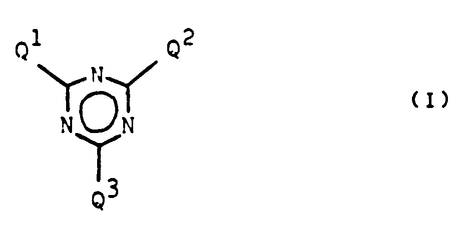 in which Q¹, Q² and Q³ independently of one another each denote a -X-A, -OR¹, -SR¹, halogen or -NR²R³ radical or a radical Q of one, two or up to fifteen trivalent groups of the formula (Ia) 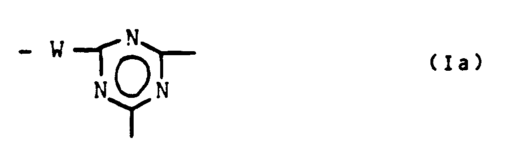 each of which is bonded via the divalent group W to a free valency of the next group of the formula (Ia) or to the triazine ring of the parent substance of the formula (I) and on the other free valencies in each case to a -X-A, -OR¹; -SR¹, halogen or -NR²R³ radical and which, in the case of more than two groups of the formula (Ia), are bonded to one another in linear or branched form, at least one radical of the formula -X-A being present in the compound of the formula (I) and
A stands for the radical of an aromatic ring system with 2 to 6 fused-on rings and with a total of at least 9 ring atoms, or stands for the radical of a group of 2 to 3 bonded aromatic ring systems in each case of one ring or 2 to 4 fused-on rings with in each case 5 to 7 ring atoms per ring, in which the bonded aromatic ring systems are bonded via a direct bond or a divalent group from the series comprising -O-, -S-, -CO-, -SO-, -SO₂- and C₁-C₁₂-alkylene, or stands for one of the radicals mentioned, which contain one or more substituents from the series comprising C₁-C₂₄-alkyl, -OR', halogen, -NR'R", -COOR', -CONR'R", -NR'COR", -CN, -CF₃ and -NO₂, in which R' and R" independently of one another denote hydrogen or a straight-chain or branched C₁-C₁₂-alkyl, or together with the N atom denote a 5- or 6-membered heterocyclic radical,
X stands for a divalent group -NR*-, -O- or -S-, in which R* denotes a radical from the series comprising hydrogen, C₁-C₆-alkyl, C₁-C₆-hydroxyalkyl, (C₁-C₄-alkoxy)-C₁-C₆-alkyl and C₅-C₇-cycloalkyl,
R¹, R² and R³ independently of one another stand for the hydrogen radical, straight-chain or branched C₁-C₂₄- alkyl or C₂-C₂₄-alkenyl, C₅-C₁₂-cycloalkyl with one or two rings, C₇-C₁₈-aralkyl, heteroaryl with 1 or 2 rings and a total of 5 to 8 ring atoms, phenyl,
a phenyl radical which is substituted by at least one radical from the group comprising C₁-C₁₂-alkyl, halogen, -OR⁴, -NR⁴R⁵, -COOR⁴, -CONR⁴R⁵, -NR⁵COR⁴, -CN, -CF₃, -NO₂ and -T-(CH₂)ₚ-NR^{o}R^{t},
in which R⁴ and R⁵ independently of one another denote hydrogen or C₁-C₂₄-alkyl, R^{o} and R^{t} independently of one another denote C₁-C₂₄-alkyl, p denotes a number from 1 to 6 and T denotes a direct bond or a divalent group from the series comprising -O-, -S-, -CO-, -SO-, -SO₂-, -NR^{a}-, -NR^{a}CO-, -NR^{a}SO₂-, -SO₂NR^{a}- and -CONR^{a}-
and R^{a} denotes hydrogen or a C₁-C₁₂-alkyl group,
or stands for C₁-C₁₂-hydroxyalkyl or -polyhydroxyalkyl, or stands for a C₁-C₃₀-alkyl radical, which is interrupted in the chain by one or more non-adjacent divalent groups of the formula -O- or -NR^{v}-, in which R^{v} denotes hydrogen or C₁-C₂₄-alkyl, or a combination of at least two of the divalent groups and which can be substituted by a 5- or 6-membered heterocyclic ring, or
R¹ has the abovementioned meaning and R² and R³, together with the N atom, stand for a 5- or 6-membered ring of a heterocyclic system with one or two rings, and
W represents a divalent group of the formula -NR^{s}-Y-NR^{t}-, -O-Y-O-, -O-Y-NR^{s}-, -S-Y-S-, -O-Y-S- or -NR^{s}-Y-S-, wherein, in the above formulae, Y stands for a straight-chain or branched C₂-C₂₀-alkylene group or a C₂-C₂₀-alkylene group, which is interrupted by one or more groups -O-, -S-, -NR^{u}-, in which R^{u} denotes hydrogen or C₁-C₂₄-alkyl, -CO-, -SO-, -SO₂-, -C₅-C₇-cycloalkylene or C₅-C₁₀-arylene, a divalent heterocyclic ring with 5 to 7 ring atoms or a combination of the above groups, and which is not further substituted or is further substituted, or stands for a divalent 1-, 2- or 3-nuclear saturated, unsaturated or aromatic carbocyclic or heterocyclic ring system with 5 to 14 ring atoms, or two of the ring systems which are linked via a direct bond or a C₁-C₆-alkylene, -O-, -S-, -CO-, -SO- or -SO₂- group, the ring systems not being further substituted or being further substituted, and
R^{s} and R^{t} independently of one another denote a hydrogen radical, C₁-C₂₄-alkyl, C₁-C₆-hydroxyalkyl, (C₁-C₄-alkoxy)-C₁-C₆-alkyl or cycloalkyl or, together with N-Y-N, denote a heterocyclic ring.

2. A pigment formulation as claimed in claim 1, which contains a compound of the formula (I) in which Q¹, Q² and Q³ independently of one another each denote a radical of the formula -X-A or -NR²R³ or a radical Q of 1 to 15 trivalent groups of the formula (Ia), each of which are bonded via a divalent group W to a free valency of the next group of the formula (Ia) or to the triazine radical of the parent substance of the formula (I) and on the other free valencies in each case to a radical -X-A or -NR²R³ and which, in the case of more than two groups of the formula (Ia), are bonded to one another in linear or branched form, at least one radical of the formula -X-A being present in the compound of the formula (I).

3. A pigment formulation as claimed in either of claims 1 or 2, which contains a compound of the formula (I) in which A stands for the radical of an aromatic ring system with 2 or 3 fused-on rings with 9 to 14 ring atoms, or stands for the radical of a group of 2 aromatic ring systems with in each case one ring or two fused-on rings with in each case 5 to 7 ring atoms per ring, in which the bonded aromatic systems are bonded via a direct bond or a divalent group from the series comprising -O-, -CO-, -SO₂- and -CH₂-, or stands for one of the radicals mentioned, which contains one to three radicals from the series comprising C₁-C₂₄-alkyl, -OR', halogen, -NR'R", -COOR', -CONR'R'', -NR'COR", -CN, CF₃ or -NO₂, in which R' and R" independently of one another denote hydrogen or C₁-C₄-alkyl or, together with the N atom, denote a heterocyclic radical, and X stands for a divalent group -NR*-, -O- or S, in which R* denotes hydrogen or C₁-C₄-alkyl.

4. A pigment formulation as claimed in at least one of claims 1 to 3, which contains a compound of the formula (I) in which A represents the radical of a heteroaromatic ring system with 2 or 3 fused-on rings with a total of 9 to 14 ring atoms and nitrogen or sulfur atoms or a mixture thereof as heteroatoms, the ring system not being further substituted or containing at least one of the substituents mentioned.

5. A pigment formulation as claimed in at least one of claims 1 to 4, which contains a compound of the formula (I) in which R¹, R² and R³ independently of one another stand for the hydrogen radical, straight-chain or branched C₁-C₁₂-alkyl or C₃-C₁₂-alk-(2-11)-enyl, C₅-C₇-cycloalkyl, C₇-C₁₂-phenylalkyl, heteroaryl with 5 or 6 ring atoms, phenyl, a phenyl radical which is substituted by 1 to 3 radicals from the group comprising C₁-C₁₂-alkyl, Cl, -OR⁴, -NR⁴R⁵ and -T-(CH₂)ₚ-NR^{o}R^{t} in which R⁴ and R⁵ independently of one another denote hydrogen or C₁-C₄-alkyl, R^{o} and R^{t} independently of one another denote C₁-C₁₂-alkyl, p denotes a number from 1 to 6 and T denotes a direct bond or a divalent group from the series comprising -SO₂-, -SO₂NR^{a}- and -CONR^{a}-, or stand for C₁-C₆-hydroxyalkyl or (C₁-C₄-alkoxy)-C₁-C₁₂-alkyl, in particular (C₁-C₄-alkoxy)-C₁-C₆-alkyl, or stand for a radical of the formula -(CR⁶R⁷)_{q}-NR⁸R⁹, in which a denotes a number from 1 to 6, in particular 1 to 3, R⁶ and R⁷ independently of one another denote hydrogen or C₁-C₆-alkyl, preferably hydrogen, and R⁸ and R⁹ independently of one another denote C₁-C₂₄-alkyl or R⁸ denotes hydrogen and R⁹ denotes C₁-C₂₄-alkyl, or R⁸ and R⁹, together with the N atom, denote a 5- or 6-membered ring of a heterocyclic system, or R¹ has the abovementioned meaning and R² and R³, together with the N atom, stand for a saturated, unsaturated or aromatic heterocyclic ring which has 5 or 6 ring atoms and which is not further substituted or is further substituted.

6. A pigment formulation as claimed in at least one of claims 1 to 5, which contains a compound of the formula (I) in which W represents a group of the formula -NR^{s}-Y-NR^{t}-, in which Y stands for a straight-chain C₂-C₈-alkylene group or a C₂-C₁₂-alkylene group which is interrupted by one or more divalent -O-, -S-, -NR^{u}-, in which R^{u} denotes hydrogen or C₁-C₁₈-alkyl, -CO-, -SO-, or -SO₂- groups or a divalent heterocyclic radical with 5 to 7 ring atoms or a combination of the above groups, or stands for a divalent mono- or dinuclear carbocyclic or heterocyclic ring system with 5 to 8 ring atoms, or stands for two of the ring systems, which are linked via a direct bond or a -CH₂-, -CH(CH₃)-, -C(CH₃)₂-, -O-, -S-, -CO-, -SO- or -SO₂- group, the ring systems not being further substituted or being further substituted, and R^{s} and R^{t} denote hydrogen or C₁-C₁₈-alkyl.

7. A pigment formulation as claimed in at least one of claims 1 to 5, which contains 0.3 to 10 mg of a compound of the formula (I) per square meter of pigment surface.

8. A pigment formulation as claimed in at least one of claims 1 to 7, which essentially contains
a) at least one organic pigment,
b) 0.2 to 30% by weight of a compound of the formula (I),
c) 0 to 20% by weight of an anionic, cationic or non-ionic surfactant, and
d) 0 to 20% by weight of customary additives,
the amounts of constituents b), c) and d) being based on the weight of the pigment or pigments.

9. A process for the preparation of a pigment formulation as defined in at least one of claims 1 to 8 by coating the surface of the pigment with one or more compounds of the formula (I).

10. The use of a pigment formulation as defined in at least one of claims 1 to 8 for pigmenting and coloring naturally occurring and synthetic materials, in particular for coloring plastics and high-molecular-weight materials, or in the preparation of printing inks or paints, in particular stoving lacquers.

## Revendications

1. Préparation pigmentaire caractérisée en ce qu'elle comprend :
a) un ou plusieurs pigments avec b) un ou plusieurs composés incolores ou peu colorés de formule générale I ci-dessous : 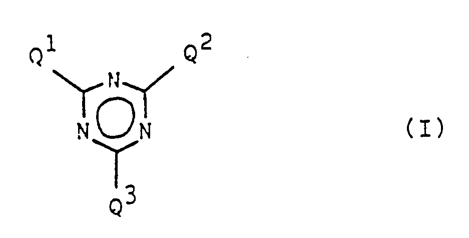 dans laquelle Q¹, Q² et Q³ représentent chacun, indépendamment les uns des autres, un radical -X-A, -OR¹, -SR¹, halogène, -NR²R³ ou un radical Q d'un, de deux ou jusqu'à 15 groupes trivalents de formule Ia : 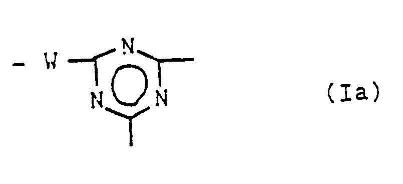 liés chacun par le groupe divalent W avec une valence libre du groupe voisin (Ia) ou avec le cycle triazinique du corps de base de formule I ainsi qu'aux autres valences libres chaque fois avec un radical -X-A, -OR¹, -SR¹, halogène ou -NR²R³, et qui, s'il y a plus de deux groupes (Ia), sont reliés l'un à l'autre en chaîne linéaire ou ramifiée, le composé de formule I comprenant au moins un radical -X-A,
A désignant le radical d'un système cyclique aromatique ayant de 2 à 6 cycles condensés et au total au moins 9 atomes de cycles, ou bien le radical d'un groupe de 2 à 3 systèmes cycliques aromatiques reliés, chacun d'un cycle ou de deux à quatre cycles condensés avec chacun par cycle de 5 à 7 atomes de cycle, dans lequel les systèmes cycliques aromatiques reliés sont liés par une liaison directe ou par un radical divalent -O-, -S-, -CO-, -SO-, -SO₂- ou C₁-C₁₂-alkylène, ou encore l'un des radicaux indiqués avec un ou plusieurs substituants pris parmi les suivants : C₁-C₂₄-alkyles, -OR', halogènes, -NR'R", -COOR', -CONR'R", -NR'COR", -CN, -CF₃ et -NO₂, R' et R" désignant chacun, indépendamment l'un de l'autre, l'hydrogène ou un alkyle en C₁-C₁₂ linéaire ou ramifié ou bien formant ensemble et avec l'atome d'azote un hétérocycle pentagonal ou hexagonal,
X étant un groupe divalent -NR^{*}-, -O- ou -S-, R^{*} désignant l'hydrogène, un alkyle en C₁-C₆, un hydroxyalkyle en C₁-C₆, un (C₁-C₄-alcoxy)-C₁-C₆-alkyle ou un cycloalkyle en C₅-C₇,
R¹, R² et R³ désignant chacun, indépendamment les uns des autres, l'hydrogène, un alkyle en C₁-C₂₄ ou un alcényle en C₂-C₂₄ linéaires ou ramifiés, un cycloalkyle en C₅-C₁₂ et à un ou deux cycles, un aralkyle en C₇-C₁₈, un hétéroaryle avec un ou deux cycles et au total de 5 à 8 atomes de cycles, un phényle avec éventuellement comme substituants un ou plusieurs alkyles en C₁-C₁₂, halogènes, groupes -OR⁴, -NR⁴R⁵, -COOR⁴, -CONR⁴R⁵, -NR⁵COR⁴, -CN, -CF₃, -NO₂ ou -T-(CH₂)p-NR^{o}R^{t},
R⁴ et R⁵ étant indépendamment l'un de l'autre l'hydrogène ou un alkyle en C₁-C₂₄, R^{o} et R^{t} indépendamment l'un de l'autre un alkyle en C₁-C₂₄, p un nombre de 1 à 6 et T une liaison directe ou un radical divalent -O-, -S-, -CO-, -SO-, -SO₂-, -NR^{a}-, -NR^{a}CO-, -NR^{a}SO₂-, SO₂NR^{a}- ou -CONR^{a}-, et R^{a} l'hydrogène ou un alkyle en C₁-C₁₂, ou bien un hydroxyalkyle en C₁-C₁₂ ou un polyhydroxyalkyle en C₁-C₁₂ ou encore un alkyle en C₁-C₃₀ à chaîne interrompue par un ou plusieurs radicaux divalents non voisins -O- ou -NR^{v}-, R^{v} désignant l'hydrogène ou un alkyle en C₁-C₂₄, ou par un ensemble d'au moins deux de ces radicaux divalents, et pouvant avoir comme substituant un radical hétérocyclique pentagonal ou hexagonal, ou bien
R¹ ayant la signification ci-dessus et R² et R³ formant ensemble avec l'atome d'azote un cycle pentagonal ou hexagonal d'un système hétérocyclique à un ou deux cycles, et
W représentant un groupe divalent -NR^{s}-Y-NR^{t}, -O-Y-O-, -O-Y-NR^{s}, -S-Y-S-, -O-Y-S- ou -NR^{s}-Y-S-, dans les formules précédentes Y désignant un alkylène en C₂-C₂₀ linéaire ou ramifié ou interrompu par un ou plusieurs radicaux -O-, -S-, -NR^{u}-, R^{u} étant l'hydrogène ou un alkyle en C₁-C₂₄, -CO-, -SO-, -SO₂-, C₅-C₇-cycloalkylènes, C₅-C₁₀-arylènes, par un radical hétérocyclique divalent à cycle de 5 à 7 atomes ou par un ensemble des radicaux précédents, et avec ou sans autres substituants, ou bien un système cyclique divalent à un, deux ou trois cycles, saturé, insaturé ou aromatique, carbocyclique ou hétérocyclique, avec de 5 à 14 atomes de cycles, ou encore deux de ces systèmes cycliques reliés par une liaison directe ou par un alkylène en C₁-C₆, -O-, -S-, -CO-, -SO- ou -SO₂-, systèmes cycliques qui peuvent être avec ou sans autres substituants, et
R^{s} et R^{t} désignant chacun, indépendamment l'un de l'autre, l'hydrogène, un alkyle en C₁-C₂₄, un hydroxyalkyle en C₁-C₆, un (C₁-C₄-alcoxy)-C₁-C₆-alkyle ou un cycloalkyle ou formant ensemble et avec N-Y-N un hétérocycle.

2. Préparation pigmentaire selon la revendication 1, caractérisée ce qu'elle comprend un composé de formule I dans lequel Q¹, Q² et Q³ désignent chacun, indépendamment les uns des autres, un radical -X-A-, -NR²R³ ou un radical Q de 1 à 15 groupes trivalents de formule Ia reliés par un groupe divalent W avec une valence libre du groupe voisin (Ia) ou avec le radical triazinique du corps de base de formule I ainsi qu'aux autres valences libres dans chaque cas avec un radical -X-A- ou -NR²R³, et qui, s'il y a plus de deux groupes (Ia), sont liés l'un à l'autre en chaîne linéaire ou ramifiée, le composé de formule I comprenant au moins un radical -X-A.

3. Préparation pigmentaire selon la revendication 1 ou 2, caractérisée en ce qu'elle comprend un composé de formule I dans lequel A est le radical d'un système cyclique aromatique à 2 ou 3 cycles condensés et de 9 à 14 atomes de cycles ou le radical d'un groupe de deux systèmes cycliques aromatiques avec chacun un cycle ou deux cycles condensés ayant chacun de 5 à 7 atomes par cycle, dont les systèmes aromatiques reliés sont liés par une liaison directe ou un radical divalent -O-, -CO-, -SO₂- ou -CH₂-, ou bien l'un des radicaux indiqués avec de un à trois radicaux C₁-C₂₄-alkyles, -OR', halogènes, -NR'R", -COOR', -CONR'R", -NR'COR", -CN, CF₃ ou -NO₂, R' et R" désignant chacun, indépendamment l'un de l'autre, l'hydrogène ou un alkyle en C₁-C₄ ou bien formant ensemble et avec l'atome d'azote un hétérocycle, et X est un radical divalent -NR*-, -O- ou S, R* désignant l'hydrogène ou un alkyle en C₁-C₄.

4. Préparation pigmentaire selon une ou plusieurs des revendications 1 à 3, caractérisée en ce qu'elle comprend un composé de formule I dans lequel A est le radical d'un système cyclique hétéroaromatique avec deux ou trois cycles condensés ayant au total de 9 à 14 atomes de cycles et comme hétéroatomes des atomes d'azote ou de soufre ou les deux à la fois, système cyclique qui est sans autres substituants ou qui a un ou plusieurs des substituants indiqués.

5. Préparation pigmentaire selon une ou plusieurs des revendications 1 à 4, caractérisée en ce qu'elle comprend un composé de formule I dans lequel R¹, R² et R³ sont chacun, indépendamment les uns des autres, l'hydrogène, un alkyle en C₁-C₁₂ ou un C₃-C₁₂-alc-(2,11)-ényle linéaires ou ramifiés, un cycloalkyle en C₅-C₇, un phénylalkyle en C₇-C₁₂, un hétéroaryle ayant 5 ou 6 atomes dans le cycle, un phényle avec éventuellement comme substituants 1 à 3 radicaux C₁-C₁₂-alkyles, Cl, -OR⁴, -NR⁵R⁴ ou -T(CH₂)ₚ-NR^{o}R^{t}, R⁴ et R⁵ désignant chacun, indépendamment l'un de l'autre, l'hydrogène ou un alkyle en C₁-C₄, R^{o} et R^{t}, indépendamment l'un de l'autre, un alkyle en C₁-C₁₂, p un nombre de 1 à 6 et T une liaison directe ou un groupe divalent -SO₂-, SO₂NR^{a}- ou -CONR^{a}-, ou bien un hydroxyalkyle en C₁-C₆, un (C₁-C₄-alcoxy)-C₁-C₁₂-alkyle, en particulier un (C₁-C₄-alcoxy)-C₁-C₆-alkyle, ou encore un radical -(CR⁶R⁷)_{q}-NR⁸R⁹, q étant un nombre de 1 à 6, notamment de 1 à 3, R⁶ et R⁷ désignant chacun, indépendamment l'un de l'autre, l'hydrogène ou un alkyle en C₁-C₆, de préférence l'hydrogène, et R⁸ et R⁹, indépendamment l'un de l'autre, un alkyle en C₁-C₂₄, ou bien R⁸ l'hydrogène et R⁹ un alkyle en C₁-C₂₄, ou encore R⁸ et R⁹ formant ensemble et avec l'atome d'azote un cycle pentagonal ou hexagonal d'un système hétérocyclique, ou bien R¹ a la signification ci-dessus indiquée et R² et R³ forment ensemble et avec l'atome d'azote un radical hétérocyclique saturé, insaturé ou aromatique avec 5 ou 6 atomes de cycle, et sans autres ou avec d'autres substituants.

6. Préparation pigmentaire selon une ou plusieurs des revendications 1 à 5, caractérisée en ce qu'elle comprend un composé de formule I dans lequel W est un groupe -NR^{s}-Y-NR^{t}, Y désignant un alkylène linéaire en C₂-C₈ ou un alkylène en C₂-C₁₂ interrompu par un ou plusieurs radicaux divalents -O-, -S-, -NR^{u}-, R^{u} étant l'hydrogène ou un alkyle en C₁-C₁₈, -CO-, -SO-, -SO₂-, ou un radical hétérocyclique divalent ayant de 5 à 7 atomes dans le cycle ou encore par un ensemble des radicaux précédents, ou bien un système cyclique divalent à un ou deux cycles, carbocyclique ou hétérocyclique, ayant de 5 à 8 atomes de cycles, ou encore deux de ces systèmes cycliques reliés par une liaison directe ou par un radical -CH₂- -CH(CH₃)-, -C(CH₃)₂-, -O-, -S-, -CO-, -SO- ou -SO₂-, systèmes cycliques sans autres ou avec d'autres substituants, et R^{s} et R^{t} désignant l'hydrogène ou un alkyle en C₁-C₁₈.

7. Préparation pigmentaire selon un ou plusieurs des revendications 1 à 6, caractérisée en ce qu'elle contient de 0,3 à 10 mg du composé de formule I par mètre carré de surface du pigment.

8. Préparation pigmentaire selon une ou plusieurs des revendications 1 à 7, caractérisée en ce qu'elle contient essentiellement :
a) un ou plusieurs pigments organiques,
b) de 0,2 à 30% en poids d'un composé de formule I,
c) de 0 à 20% en poids d'un agent surfactif anionique, cationique ou non-ionogène, et
d) de 0 à 20% en poids d'additifs courants,
les proportions des constituants b), c) et d) étant rapportées au poids du pigment ou des pigments.

9. Procédé de préparation des préparations pigmentaires selon les revendications 1 à 8, procédé caractérisé en ce que l'on garnit la surface des pigments d'un ou de plusieurs composés de formule I.

10. Emploi des préparations pigmentaires selon les revendications 1 à 8 pour pigmenter et colorer des matières naturelles ou synthétiques, en particulier des matières plastiques et autres matières macromoléculaires, ainsi que pour préparer des encres d'impression et peintures, notamment des vernis à cuire.
